# EUROPEAN PATENT SPECIFICATION

(11) **EP 1 975 212 B1**
(45) Date of publication and mention of the grant of the patent: **21.09.2011**
(21) Application number: 08005818.3
(22) Date of filing: 27.03.2008
(51) Int. Cl.: C09D 11/00, C09D 11/10

(54) **Ink composition, inkjet recording method, printed material, planographic printing plate, and method for forming planographic printing plate**
Tintenzusammensetzung, Tintenstrahlaufzeichnungsverfahren, Drucksachen, Flachdruckplatte und Verfahren zur Herstellung einer Flachdruckplatte
Composition d'encre, procédé d'enregistrement de jet d'encre, matériau imprimé, plaque d'impression planographique et procédé de production de plaque d'impression planographique

(30) Priority: 30.03.2007 JP 2007092895
(43) Date of publication of application: 01.10.2008
(73) Proprietor: FUJIFILM Corporation, Minato-ku Tokyo (JP)
(72) Inventor: Yokoi, Kazuhiro, Shizuoka-ken (JP)
(74) Representative: HOFFMANN EITLE

(56) References cited:
- EP-A- 1 688 468

## Description

### BACKGROUND OF THE INVENTION

### Field of the Invention

The present invention relates to an ink composition suitable for use in inkjet recording, an inkjet recording method and printed materials produced using the method. Further, the invention relates to a planographic printing plate obtained using the ink composition and a method for forming the planographic printing plate. More specifically, present invention relates to an ink composition which is preferable for inkjet recording, can be cured to give high sensitivity and form high-quality images, and has good storage stability. Furthermore, the invention provides an inkjet recording method using the ink composition, a printed material obtained by the inkjet recording method, a planographic printing plate obtained using the ink composition and a method for forming the planographic printing plate.

### Description of the Related Art

There are various image recording methods for forming images on a recording material, such as paper, based on image data signals, such as electrophotographic methods, sublimation and fusion thermal transfer methods, and inkjet methods. Among these, inkjet methods can be implemented with inexpensive apparatus, and allow efficient use of ink since ink can be ejected only onto areas required for image formation, and form images directly on a recording material, resulting in reduced running costs. In addition, inkjet methods permit printing with a low noise level, and thus they are excellent image recording methods.

In inkjet methods, although printing can be performed, in addition to on paper, on a recording material having no water-absorbing properties, such as a plastic sheet or a metal sheet, there are significant problems in speeding up printing and enhancing image quality. More specifically, in the inkjet method, the time required for drying and curing of ink droplets after printing greatly affects the productivity in printing, as well as the sharpness of printed images.
One of the conventionally-known inkjet methods is a recording method using inkjet recording ink curable by exposure to radiation. According to this method, ink droplets are cured by exposure to radiation immediately after ejection of ink or after a certain lapse of time from ejection of ink, and thereby productivity in printing can be improved and sharp images can be formed.
By achieving an increase in sensitivity of inkjet recording ink curable by exposure to radiation such as ultraviolet rays, the inkjet recording ink can have high curability when irradiated with radiation; as a result, there arise many benefits including a productivity increase in inkjet recording, a reduction in power consumption, an increase in the longevity of a radiation generator through reduction of a load thereon, and prevention of evaporation of low-molecular substances caused by insufficient curing. In addition, the increase in sensitivity enhances the strength of images formed by ink for inkjet recording in particular, and, when high-sensitivity inkjet recording ink is applied to making of a planographic printing plate in particular, the cured strength of image areas is increased and high printing durability can be attained.

In recent years, the inkjet method wherein curing by radiation such as ultraviolet rays takes place has been receiving attention due to it having a relatively weak odor, quick-drying properties and because it allows recording on recording materials having no ink absorbency, and consequently ultraviolet cured inkjet ink compositions utilizing radical polymerization have come to be known (see, for example, Japanese Patent Application Laid-Open (JP-A) No. 5-214280).
Further, compositions which contain a colorant and a polymerizable compound consisting of specific radical polymerizable acrylate compounds have been proposed with the aim of providing ink jet recording inks which exhibit no blurring, have high sensitivity and are capable of recording images having high adherence to recording materials, as well as being highly safe due to being less irritating and less sensitizing with respect to skin, even with respect to supports that are generally difficult to apply to direct recording in inkjet recording (see, for example, JP-A No. 2003-192943). While these inks utilizing radical-polymerizable compounds may be excellent in curing fastness and provide images without blurring, these inks have the problem of reduced adherence to recording materials due to shrinkage thereof which occurs when they are cured.

In consideration to this, cationic polymerization ink compositions, which exhibit small shrinkage ratio upon curing by ultraviolet ray, have been put forth for the purpose of promoting adhesion to recording materials (see JP-A No. 9-183928). However, these ink compositions have insufficient stability during storage owing to a reaction based on acids that occurs over time, which constitutes an obstacle to practical utilization. As an attempt to improve storage stability, the technique of adding a basic compound thereto was therefore proposed (See JP-A No. 2004-91558).
However, a new problem of a drop in the curing sensitivity of the ink arose, because the basic compound impaired the function of an acid produced by exposure.
As a solution to this problem, a technique which utilizes a base compound that has had its ability to inhibit curing reactions suppressed by being degraded by energy applied in the curing process, has been proposed (see JP-A No. 2006-219539). However, a decrease in sensitivity due to the nucleophilicity of an acid group of the base compound is cause for concern, and there remains scope for further improvement in terms of achieving both storage stability and high sensitivity.

### SUMMARY OF THE INVENTION

The invention has been made with consideration given to the above-described problems. The invention the invention provides an ink composition which is preferable for inkjet recording, can be cured to give high sensitivity and form high-quality images, and has good storage stability. Further, the invention provides an inkjet recording method using the ink composition.
Moreover, the invention provides printed materials and a planographic printing plate which are each obtained by using the ink composition having high storage stability and being capable of being cured to give high sensitivity by exposure to radiation, and further provides a method for making the planographic printing plate.

As a result of intensive research by the present inventors, it has been found that an ink composition that is suitable for ink jet recording due to having good storage stability while maintaining high sensitivity as well as having improved ejectability, droplet shape retention property, and adherence to surfaces of recording materials, can be obtained by using, as an additive, an onium salt having an anionic portion having a hindered amine structure having its nucleophilicity reduced by incorporation of a bulky structure into the vicinity of an amine structure (base group) and an onium cationic portion having a specific structure which decomposes at high sensitivity upon being irradiated with light.

Namely, a first aspect of the invention is an ink composition comprising: an onium salt compound (A) having an anionic portion (i) comprising an acid group having low nucleophilicity and a hindered amine structure and a cationic portion (ii) which is photo-decomposable; a cationic polymerization initiator (B) responsible to radiation; a cationic polymerizable compound (C) ; and a coloring agent (D).

A second aspect of the invention is a method for ink jet recording comprising: ejecting the ink composition of the first aspect of the invention onto a recording medium; and irradiating the ejected ink composition with radiation so as to cure the ink composition.
A third aspect of the invention is a printed material obtained by the method of the second aspect of the invention.

A fourth aspect of the invention is a method for forming a planographic printing plate comprising: ejecting the ink composition of the first aspect of the invention onto a hydrophilic support; and irradiating the ejected ink composition with radiation so as to cure the ink composition and form a hydrophobic region.
Further, a fifth aspect of the invention is a planographic printing plate comprising a hydrophobic region which is formed by the method of the fourth aspect of the invention.

### DETAILED DESCRIPTION

Ink composition The ink composition of the invention is curable by being irradiated with radiation, and has at least an onium salt compound (A) having an anionic portion (i) comprising an acid group having low nucleophilicity and a hindered amine structure and a cationic portion (ii) which is photo-decomposable (hereinafter it may be referred as a "specific onium salt"); a cationic polymerization initiator (B) responsible to radiation; a cationic polymerizable compound (C) ; and a coloring agent (D).
Details of the respective components of the ink composition of the invention are provided hereinafter.

(A) Onium salt compound having Anionic portion (i) comprising an acid group having low nucleophilicity and Hindered amine structure and Photo-decomposable cationic portion (ii) The specific onium salt, which is one of the characteristic components, is a compound having an anionic portion (i) comprising an acid group having low nucleophilicity and a hindered amine structure and a cationic portion (ii) which is photo-decomposable. The "acid group having low nucleophilicity" herein means an acid group suppressed with its property to inhibit reactions by having a sterically hindered structure at its anionic portion so as to cause a low interaction to cationic terminals.
The acid group having low nucleophilicity is not particularly limited as long as it has such a structure that is sterically hindered in view of positional relationship with surroundings. Specifically, the acid group having low nucleophilicity preferably has a large valency such as 3 or 4 and has, as its anionic center, a structure in which an electron attractive group is added to a nitrogen atom or a carbon atom so that the structure easily become a hindered structure. Examples of such acid group include an acid group having a formal charge on a nitrogen atom or a carbon atom therein, and specific examples thereof include a carbamic acid, a disulfonamide, and a trisulfonylmethane.

The amine structure which resides in the anionic portion is a hindered amine structure, that is an amine structure derived from a nitrogen atom which configures one portion of a heterocyclic group and is preferably a tertiary amine. Since the nitrogen atom has a bulky substituent such as a cyclic group or a branched group, the reactivity of the amine structure as a base is relatively low.
The specific onium salt (A) works as a stabilizer of the curable ink composition against radiation when it is added to the curable ink composition. For example, when the curable ink composition is prepared to have a configuration to be cured by irradiation of light as the energy application, and unintended exposure with reflected light or the like is occurred, a slight amount of protons generated by the unintended exposure are rapidly entrapped by the basic nitrogen contained in the portion of the hindered amine, whereby the storage stability of the ink composition can be improved. On the other hand, a large amount of protons generated by normal energy application (irradiation of light) cause and promote curing reaction of the ink composition, while molecules of the specific onium salt (A) degraded by the irradiation of light form inner salts so as not to cause decrease in sensitivity, and molecules of the specific onium salt (A) remaining without being degraded by the irradiation of light do not inhibit propagation reaction of polymers formed of the cationic polymerizable compound in the ink composition since the basic portion of the molecules are hindered amines. Accordingly, the ink composition is capable of curing with a good sensitivity.
The basic nitrogen atom in the hindered amine portion is required to have a sufficiently sterically hindered structure in view of lowering its reactivity with a cationic terminal. Since the basic nitrogen atom in the hindered amine portion in the specific onium salt of the invention is surrounded by a large number of molecules, steric hindrance is caused by these molecules so that the factor which inhibits cationic polymerization reaction can be decreased. Among amine structures, a tertiary amine is particularly preferable due to its large steric hindrance. Utilization of a primary amine or a secondary amine may cause decrease in sensitivity since polymerization degree of polymers formed by chain transfer caused in the system of a curing film may be decreased due to difficulty for a primary amine or a secondary amine to obtain sufficient steric hindrance.

More specific examples of the specific onium salt (A) include the compounds represented by any one of the following Formulae (a) to (e).

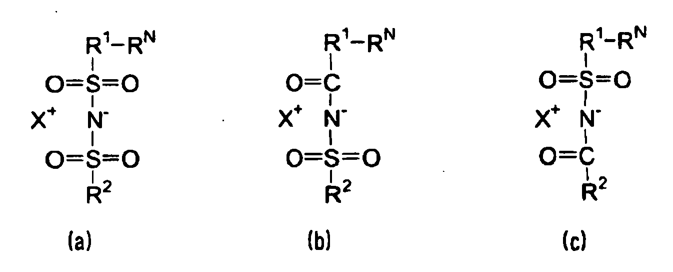

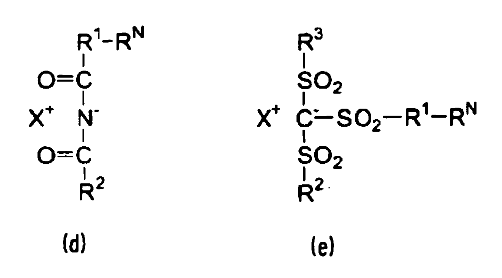

In Formulae (a) to (e), X represents a degradable sulfonium or a degradable iodonium, which confugures the cationic portion of the specific onium salt. The cationic portion is a degradable cation having excellent reactivity, and is preferably a sulfonium cation having an aryl group or a iodonium cation having an aryl group.
The aryl group preferably has a substituent. Examples of the substituent introduced into the aryl group include a halogen atom, a hydroxyl group, an alkyl group, an alkylene group, and alkyloxy group. The aryl group preferably has an electron attractive group as the substituent in view of degradability and stability, and accordingly, preferable examples of the aryl group include triaryl sulfonium, which has three aryl groups, each of which is substitued with an electron attractive group, and diaryl sulfonium, which has two aryl groups, each of which is substitued with an electron attractive group.

R¹ represents an alkylene group, an arylene group, an aralkylene group, a perfluoroalkylene group, a perfluoroarylene group, a perfluoroaralkylene group, a cycloalkylene group, or a perfluoro cycloalkylene group.
R² and R³ each independently represents an alkyl group, an aryl group, an aralkyl group, a perfluoroalkyl group, a perfluoroaryl group, a perfluoroaralkyl group, a cycloalkyl group, or a perfluoro cycloalkyl group. The group represented by R² and the group represented by R³ may be bonded with each other to form a cyclic structure. Alternatively, a portion of the group represented by R¹ and the group represented by either of R² and R³ may be bonded with each other to form a cyclic structure. The monovalent or divalent group represented by R¹, R² or R³ may further has a substituent. Examples of the substituent which can be introduced into the group include a halogen atom or a hydroxyl group.
R¹ preferably represents an alkylene group or a cycloalkylene group in view of acidity of the acid group and stability. From the similar points of view, each of R² and R³ preferably represents an alkylene group or a cycloalkylene group. In this case, the group represented by R² and the group represented by R³ can be bonded with each other to form a cyclic structure.
Among these, the group represented by R¹, R² or R³, which resides in the vicinity of the amine structure, is particularly preferably a bulky substituent having a branched structure, a cyclic structure or the like.

R^{N} represents an amine structure having the basic nitrogen atom, and preferably represents a tertiary amine structure. The amine structure is shielded by a sterically balky group(s) which reside(s) in the vicinity thereof so that its reactivity with a cationic terminal is decreased. Therefore, the amine structure has a low nucleophilicity, and exists as a hindered amine structure.
Preferable examples of the hindered amine structure represented by R^{N} include: a structure having a piperidine skeleton, each of the second and sixth positions has two substituents; and a structure having, as a substituent bonded to the tertiary amine, a bulky substituent such as an alkyl group having a branched structure, a fluoroalkyl group having a branched structure, an aryl group having a cyclic structure, a cyclohexyl group having a cyclic structure, a perfluoroaryl group having a cyclic structure, or a perfluoro cyclohexyl group having a cyclic structure.
Specific examples (exemplary compounds (A-1) to (A-26)) of the specific onium salt are shown hereinafter, while the scope of the invention is not limited thereby.

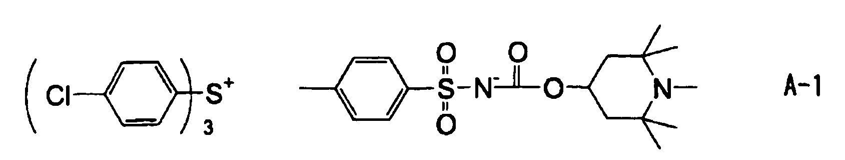

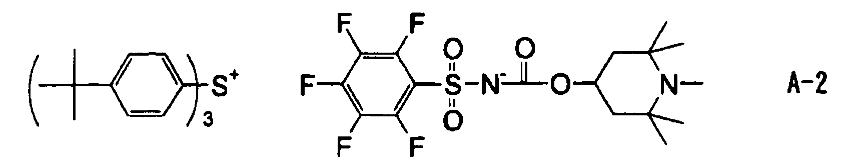

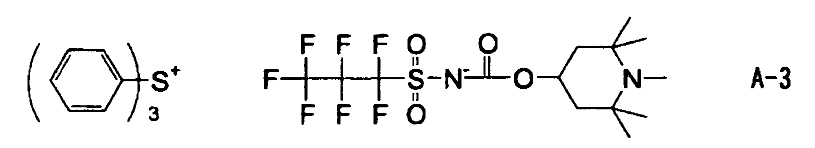

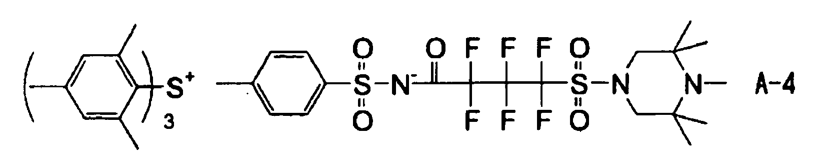

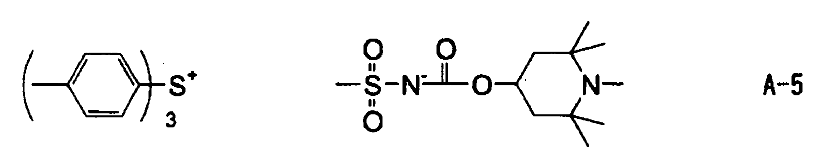

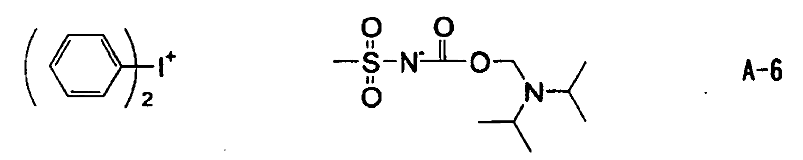

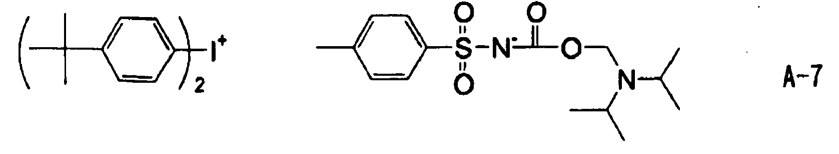

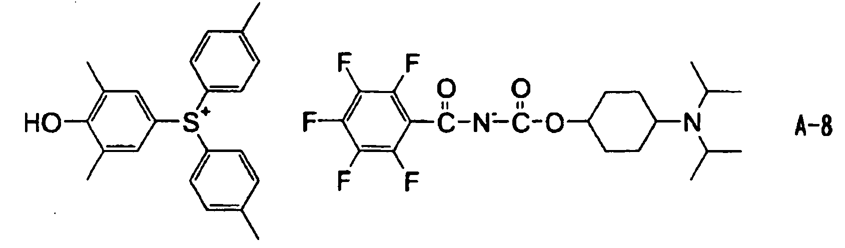

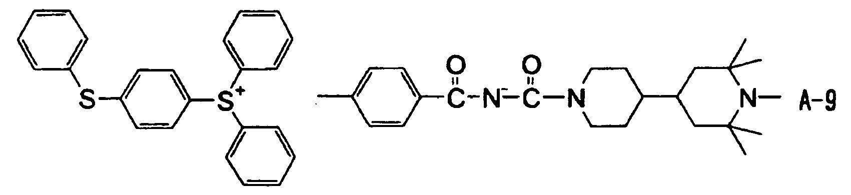

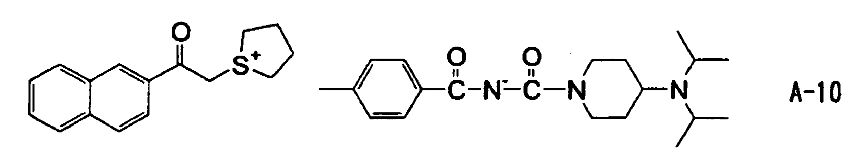

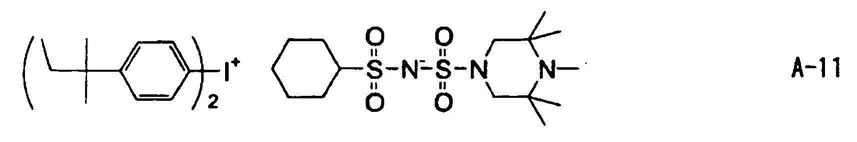

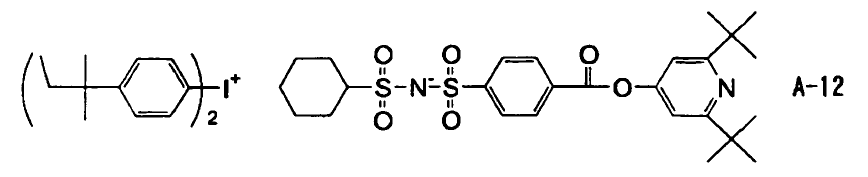

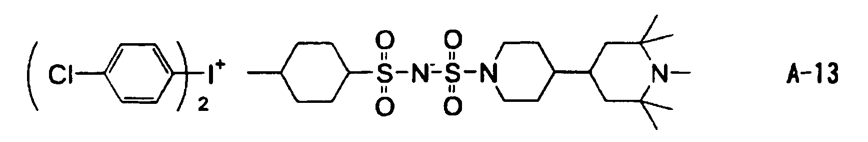

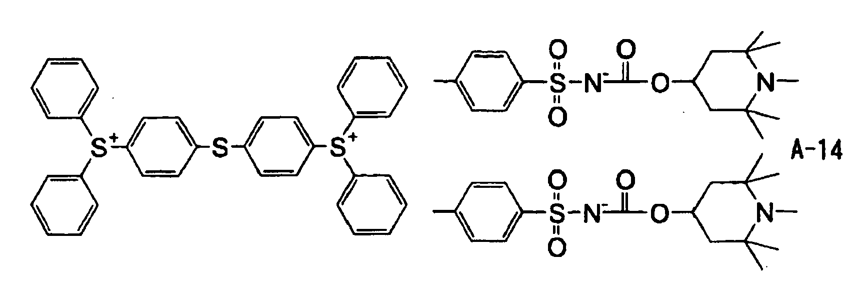

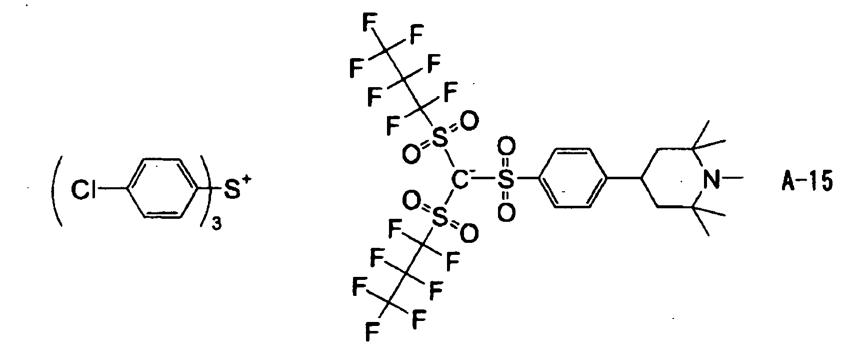

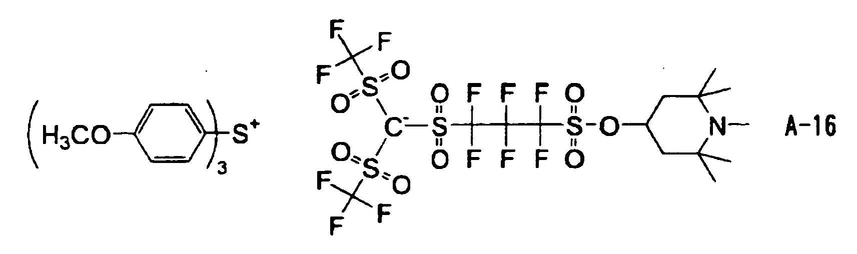

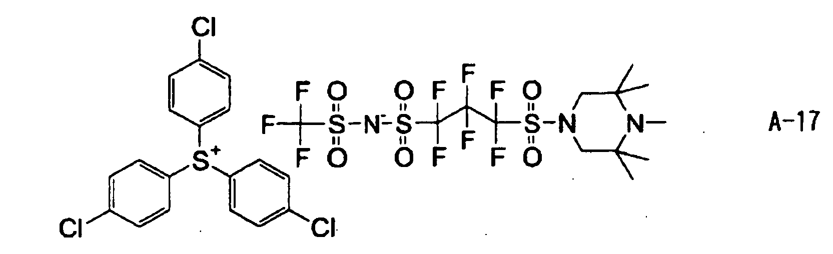

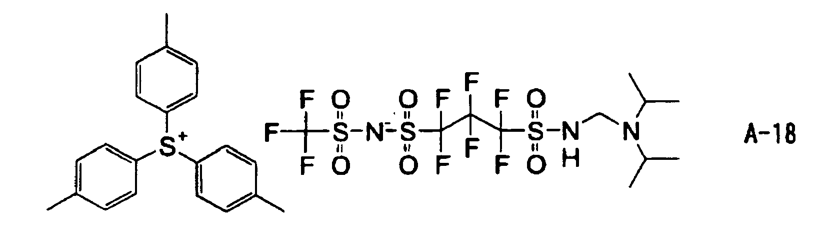

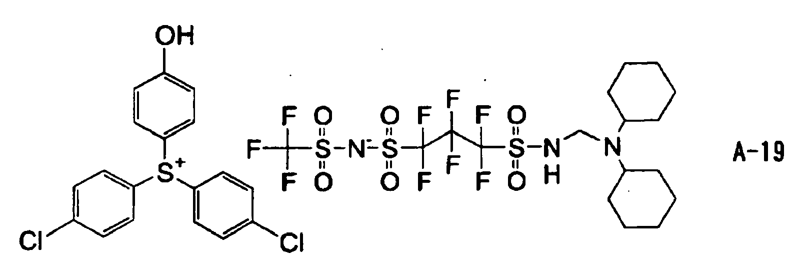

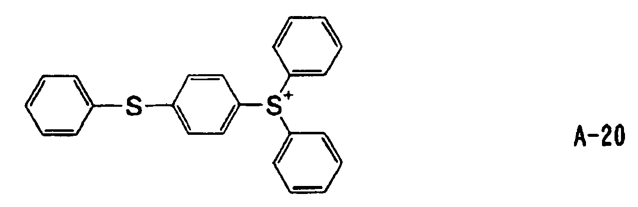

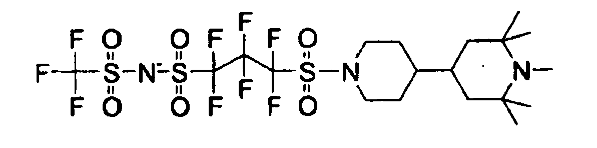

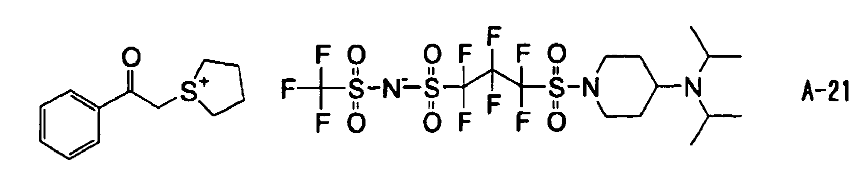

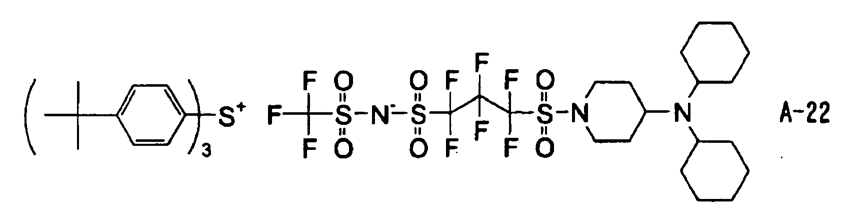

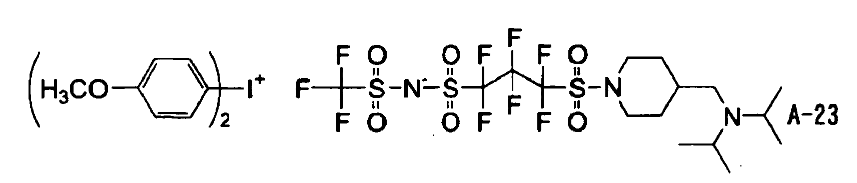

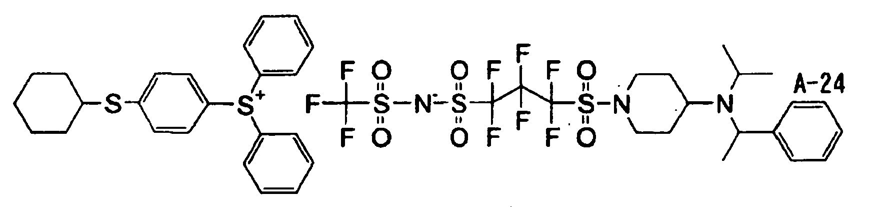

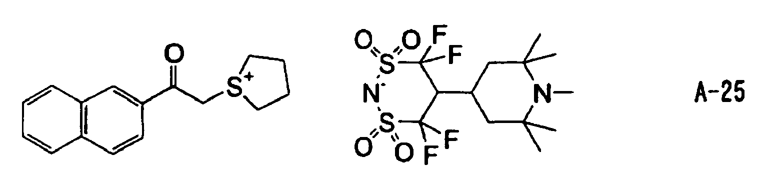

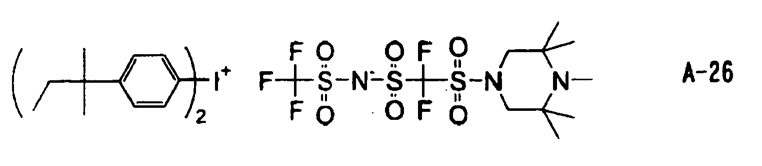

The specific onium salt (A) can be contained in the ink composition of the invention singly or in combination of two or more kinds thereof.
The specific onium salt (A) used in the ink composition of the invention is preferably selected from those having a cationic parent structure which is the same as that of the following cationic polymerization initiator(B) used in the ink composition from the viewpoint of reactivity. Specifically, the specific onium salt (A) used in the ink composition of the invention can be selected from the group consisting of a combination of the specific onium salt (A) having a sulfonium skeleton and the cationic polymerization initiator (B) having a sulfonium skeleton, and a combination of the specific onium salt (A) having a iodonium skeleton and the cationic polymerization initiator (B) having a iodonium skeleton, from the viewpoint of preventing decrease in sensitivity due to salt exchange which can be caused in the ink composition.
The amount of the specific onium salt (A) contained in the ink composition of the invention is preferably in the range of 0.01 to 15 % by mass, more preferably in the range of 0.05 to 10 % by mass, and particularly preferably in the range of 0.05 to 10 % by mass, relative to the total amount of the ink composition in terms of solid content.

(B) Cationic polymerization initiator responsible to radiation The ink composition of the invention contains a species which causes and promotes curing reaction of the cationic polymerizable compound (C) by radiation. More concretely, the species is a compound which generates an acid upon being subjected to radiation. In general, light is used as a means for the radiation. Therefore, the cationic polymerization initiator (B) responsible to radiation may be hereinafter referred as the "photo-acid generating agent".
The photo-acid generating agent used in the invention can be appropriately selected from the group consisting of photo-initiators of cationic photopolymerization, photo-initiators of radical photopolymerization, photodecoloring agents for dyes, photodiscoloring agents, or compounds capable of generating acids by exposure to radiation generally used for microplanographic resist or the like, such as light (400- to 200-nm ultraviolet and far-ultraviolet rays, particularly preferably a g-ray, an h-ray, an i-ray and KrF excimer laser light), ArF excimer laser light, electron beams, X-rays, molecular beams or ion beams.

Examples of the photo-acid generating agent include: onium salts that generate acids through decomposition upon exposure to radiation, such as diazonium salts, ammonium salts, phosphonium salts, iodonium salts, sulfonium salts, selenonium salts or arsonium salts, organic halogenated compounds, organometal/organic halide compounds; photo-acid generating agents having o-nitrobenzyl type protective groups; and compounds which generate sulfonic acid through photolysis such as iminosulfonate; disulfone compounds; diazoketosulfone; and diazodisulfone compounds.

Examples of other compound which generates acid upon irradiation with actinic rays or radiation and can be used in the invention include: onium salts such as diazonium salts as described, e.g., in S.I. Schlesinger, Photogr. Sci. Eng., 18, 387(1974) and T.S. Bal et al., Polymer, 21, 423 (1980), the ammonium salts disclosed, e.g., in U.S. Patent Nos. 4,069,055, 4,069,056 and Re 27,992, and JP-A No. 3-140140, the phosphonium salts described, e.g., in D.C. Necker et al., Macromolecules, 17, 2468(1984), C.S. Wen et al., Teh. Proc. Conf. Rad. Curing ASIA, p. 478, Tokyo, Oct(1988) and U.S. Patent Nos. 4,069,055 and 4,069,056, the iodonium salts described, e.g., in J.V. Crivello et al., Macromolecules, 10(6), 1307(1977), Chem. & Eng. News, Nov. 28, p. 31 (1988), European Patent Nos. 104,143, 339,049 and 410,201, JP-A Nos. 2-150848 and 2-296514,

the sulfonium salts described, e.g., in J.V. Crivello et al., Polymer J., 17, 73(1985), J.V. Crivello et al., J. Org. Chem., 43, 3055(1978), W.R. Watt et al., J. Polymer Sci., Polymer Chem. Ed., 22, 1789(1984), J.V. Crivello et al., Polymer Bull., 14, 279(1985), J.V. Crivello et al., Macromolecules, 14(5), 1141(1981), J.V. Crivello et al., J. Polymer Sci., Polymer Chem. Ed., 17, 2877(1979), European Patent Nos. 370,693, 161,811, 410,201, 339,049, 233,567, 297,443 and 297,442, U.S. Patent Nos. 3,902,114, 4,933,377, 4,760,013, 4,734,444 and 2,833,827, German Patent Nos. 2,904,626, 3,604,580 and 3,604,581, JP-A Nos .7-28237 and 8-27102,

the selenonium salts described, e.g., in J.V. Crivello et al., Macromolecules, 10(6), 1307(1977) and J.V. Crivello et al., J. Polymer Sci., Polymer Chem. Ed., 17, 1047(1979), and the arsonium salts described, e.g., in C.S. Wen et al., Teh. Proc. Conf. Rad. Curing ASIA, p. 478, Tokyo, Oct(1988); the organic halogenated compounds disclosed, e.g., in U.S. Patent No. 3,905,815, Japanese Patent Application Publication (JP-B) No. 46-4605, JP-ANos.48-36281, 55-32070, J60-239736, 61-169835, 61-169837, 62-58241, 62-212401, 63-70243 and 63-298339; the organometal/organic halide compounds described, e.g., in K. Meier et al., J. Rad. Curing, 13(4), 26(1986), T.P. Gill et al., Inorg. Chem., 19, 300(1980), D. Astruc, Acc. Chem. Res., 19(2), 377(1896), and JP-ANo. 2-161445;

the photo-acid generating agents having o-nitrobenzyl type protective groups described, e.g., in S. Hayase et al., J. Polymer Sci., 25, 753(1987), E. Reichmanis et al., J. Polymer Sci., Polymer Chem. Ed., 23, 1(1985), Q.Q. Zhu et al., J. Photochem., 36, 85, 39, 317(1987), B. Amit et al., Tetrahedron Lett., (24), 2205(1973), D.H.R. Barton et al., J. Chem. Soc., 3571(1965), P.M. Collins et al., J. Chem. Soc., Perkin I, 1695(1975), M. Rudinstein et al., Tetrahedron Lett., (17), 1445(1975), J.W. Walker et al., J. Am. Chem. Soc., 110, 7170(1988), S.C. Busman et al., J. Imaging Technol., 11(4), 191(1985), H.M. Houlihan et al., Macromolecules, 21, 2001(1988), P.M. Collins et al., J. Chem. Soc., Chem. Commun., 532(1972), S. Hayase et al., Macromolecules, 18, 1799(1985), E. Reichmanis et al., J. Electrochem. Soc., Solid State Sci. Technol., 130(6), F.M. Houlihan et al., Macromolecules, 21, 2001(1988), European Patent Nos. 0,290,750, 046,083, 156,535, 271,851 and 0,388,343, U.S. Patent Nos. 3,901,710 and 4,181,531, JP-ANos. 60-198538 and 53-133022;

the compounds that generate sulfonic acids through photolysis such as the iminosulfonates, as described, e.g., in M. Tunooka et al., Polymer Preprints Japan, 35(8), G. Berner et al., J. Rad. Curing, 13(4), W.J. Mijs et al., Coating Technol., 55(697), 45(1983), Akzo, H. Adachi et al., Polymer Preprints Japan, 37(3), European Patent Nos. 0,199,672, 084,515, 044,115, 618,564 and 0,101,122, U.S. Patent Nos. 4,371,605 and 4,431,774, JP-A Nos. 64-18143, 2-245756 and 3-140109; the disulfone compounds disclosed, e.g., in JP-ANos. 61-166544 and 2-71270; and the diazoketosulfone and diazodisulfone compounds disclosed, e.g., in JP-A Nos. 3-103854, 3-103856 and 4-210960.

Examples of the photo-acid generating agent further include a polymeric compound prepared by introducing, into a main or side chain thereof, the group(s) or the compound(s) described above as generating an acid by being exposed to light. Examples of the polymeric compound include the compounds described, e.g., in M.E. Woodhouse et al., J. Am. Chem. Soc., 104, 5586(1982), S.P. Pappas et al., J. Imaging Sci., 30(5), 218(1986), S. Kondo et al., Makromol. Chem., Rapid Commun., 9, 625(1988), Y. Yamada et al., Makromol. Chem., 152, 153, 163(1972), J.V. Crivello et al., J. Polymer Sci., Polymer Chem. Ed., 17, 3845(1979), U.S. Patent No. 3,849,137, German Patent No. 3,914,407, JP-A Nos. 63-26653, 55-164824, 62-69263, 63-146038, JP-ANos. 63-163452, 62-153853 and 63-146029.

Examples of the photo-acid generating agent further include a compound capable of generating an acid upon exposure to light such as those described in N.R. Pillai, Synthesis, (1), 1(1980), A. Abad et al., Tetrahedron Lett., (47) 4555(1971), D.H.R. Barton et al., J. Chem. Soc., (C), 329(1970), U.S. Patent No. 3,779,778 and European Patent No. 126,712.

Preferable examples of the compound which can be used as the photo-acid generating agent in the invention include compounds represented by any one of the following Formulae (b1), (b2) and (b3).

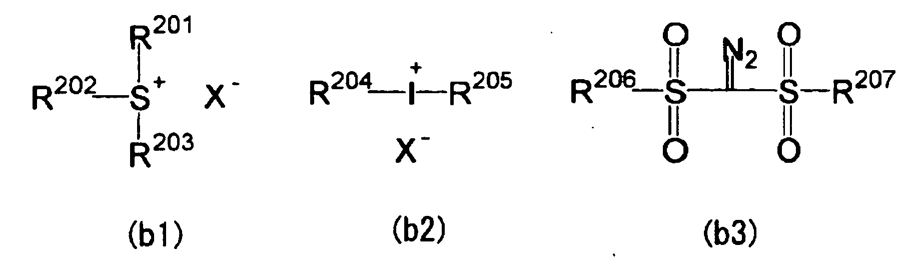

In Formula (b1), R²⁰¹, R²⁰² and R²⁰³ each independently represent an organic group.
X- represents a non-nucleophilic anion, and examples thereof include a sulfonic anion, a carboxylic acid anion, a bis(alkylsulfonyl)amide anion, a tris(alkylsulfonyl)methide anion, BF₄⁻, PF₆⁻, SbF₆⁻, and groups illustrated below. Preferable examples thereof include an organic anion having carbon atoms.

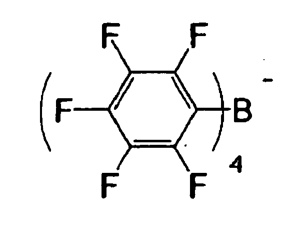

Preferable examples of the organic anion include the organic anions represented by any one of the following Formulae.

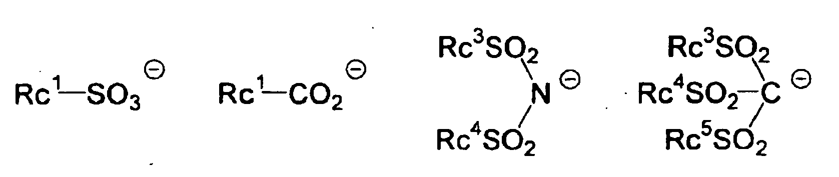

Rc¹ represents an organic group.
Examples of the organic group represented by Rc¹ include groups having 1 to 30 carbon atoms, and preferable examples thereof include an alkyl group, a cycloalkyl group, an aryl group and a group formed by combining two or more of these groups via a linkage group(s) such as a single bond, -O-, -CO₂-, -S-, -SO₃- or -SO₂N(Rd¹)-, in which Rd¹ represents a hydrogen atom or an alkyl group.

Rc³, Rc⁴ and Rc⁵ each independently represent an organic group.
Preferable examples of the organic group represented by Rc³, Rc⁴ and Rc⁵ each include the same ones as the organic group represented by Rc¹, and the organic groups most preferable as Rc³, Rc⁴ and Rc⁵ are perfluoroalkyl groups having 1 to 4 carbon atoms.
Rc³ and Rc⁴ may be bonded with each other to form a ring.
Examples of a group formed by bonding Rc³ and Rc⁴ include an alkylene group and an arylene group, and preferable examples thereof include a perfluoroalkylene group having 2 to 4 carbon atoms.

The most preferable examples of the organic group represented by any one of Rc¹ and Rc³ to Rc⁵ include an alkyl group having, at the 1-position thereof, a fluorine atom or a fluoroalkyl group as a substituent, and a phenyl group having a fluorine atom or a fluoroalkyl group as a substituent. The acidity of the acid generated by light irradiation to the photo-acid generating agent is raised when the organic group of the photo-acid generating agent has such a fluorine atom or a fluoroalkyl group, so that the sensitivity of the polymerizable compound is enhanced.

The number of carbon atoms in the organic group represented by any one of R²⁰¹, R²⁰² and R²⁰³ in Formula (b1) is generally from 1 to 30, and is preferably from 1 to 20.
Any two of R²⁰¹ to R²⁰³ may be bonded with each other to form a ring structure, and the thus-formed ring structure may have an oxygen atom, a sulfur atom, an ester bond, an amide bond and/or a carbonyl group. Examples of the group formed by bonding any two of R²⁰¹ to R²⁰³ include an alkylene group (such as a butylene group or a pentylene group).

Specific examples of the organic group represented by R²⁰¹, R²⁰² or R²⁰³ include their corresponding groups in compounds (b1-1), (b1-2) or (b1-3) respectively illustrated hereinafter.

The photo-acid generating agent may be a compound having plural structures, each of which is represented by Formula (b1). Examples of such photo-acid generating agent include a compound having a structure that at least one of R²⁰¹ to R²⁰³ in one compound represented by Formula (b1) is bonded directly or via a linkage group to at least one of R²⁰¹ to R²⁰³ in another compound represented by Formula (b1).

More preferable examples of the compounds represented by Formula (b1) include compounds (b1-1), (b1-2) and (b1-3) illustrated hereinafter.

Compound (b1-1) is an arylsulfonium compound represented by the foregoing Formula (b1) in which at least one of R²⁰¹ to R²⁰³ is an aryl group. Namely, compound (b1-1) is a compound having an arylsulfonium as a cation.

In the arylsulfonium compound, all of R²⁰¹ to R²⁰³ may be aryl groups, or at least one or two of R²⁰¹ to R²⁰³ may be an aryl group and the remainders may be an alkyl group(s) or a cycloalkyl group(s).

Examples of the arylsulfonium compound include a triarylsulfonium compound, a diarylalkylsulfonium compound, an aryldialkylsulfonium compound, a diarylcycloalkylsulfonium compound and an aryldicycloalkylsulfonium compound.

Preferable examples of the aryl group in the arylsulfonium compound include an aryl group such as a phenyl group or a naphthyl group, and a heteroaryl group such as an indole residue or a pyrrole residue. Of these groups, a phenyl group and an indole residue are more preferable. When the arylsulfonium compound has two or more aryl groups, these aryl groups may be the same or different from each other.

The alkyl group which is possessed by the arylsulfonium compound as needed is preferably a linear or branched alkyl group having 1 to 15 carbon atoms, and examples thereof include a methyl group, an ethyl group, a propyl group, an n-butyl group, a sec-butyl group and a t-butyl group.
The cycloalkyl group which is possessed by the arylsulfonium compound as needed is preferably a cycloalkyl group having 3 to 15 carbon atoms, and examples thereof include a cyclopropyl group, a cyclobutyl group and a cyclohexyl group.

The aryl group, the alkyl group or the cycloalkyl group represented by R²⁰¹, R²⁰² or R²⁰³ may have a substituent such as an alkyl group (e.g., an alkyl group having 1 to 15 carbon atoms), a cycloalkyl group (e.g., a cycloalkyl group having 3 to 15 carbon atoms), an aryl group (e.g., an aryl group having 6 to 14 carbon atoms), an alkoxy group (e.g., an alkoxy group having 1 to 15 carbon atoms), a halogen atom, a hydroxyl group or a phenylthio group. Examples of a preferable substituent include a linear or branched alkyl group having 1 to 12 carbon atoms, a cycloalkyl group having 3 to 12 carbon atoms, and a linear, branched or cyclic alkoxy group having 1 to 12 carbon atoms. Of these substituents, the alkyl group having 1 to 4 carbon atoms and the alkoxy group having 1 to 4 carbon atoms are more preferable. Any one, two or all of R²⁰¹ to R²⁰³ may respectively have such a substituent. When any one of R²⁰¹ to R²⁰³ which has a substituent is an aryl group, it is preferred that the substituent resides in the p-position of the aryl group.

Compound (b1-2) is a compound represented by Formula (b1) wherein R²⁰¹ to R²⁰³ each independently represent an organic group having no aromatic ring. Herein, the term "aromatic ring" is intended to include aromatic rings containing hetero atoms also.
The organic group which has no aromatic ring and is represented by any one of R²⁰¹ to R²⁰³ is generally an organic group having 1 to 30 carbon atoms, preferably an organic group having 1 to 20 carbon atoms.
Each of R²⁰¹ to R²⁰³ preferably represents an alkyl group, a cycloalkyl group, an allyl group or a vinyl group, more preferably represents a linear, branched or cyclic 2-oxoalkyl group or an alkoxycarbonylmethyl group, and particularly preferably a linear or branched 2-oxoalkyl group.

The alkyl group represented by any one of R²⁰¹ to R²⁰³ may be either linear or branched one, and preferable examples thereof include a linear or branched alkyl group having 1 to 10 carbon atoms (e.g., a methyl group, an ethyl group, a propyl group, a butyl group, or a pentyl group). Among these alkyl groups, a linear or branched 2-oxoalkyl group and an alkoxycarbonylmethyl group are more preferable.

The cycloalkyl group represented by any one of R²⁰¹ to R²⁰³ is preferably a cycloalkyl group having 3 to 10 carbon atoms (such as a cyclopentyl group, a cyclohexyl group or a norbornyl group), and is more preferably a cyclic 2-oxoalkyl group.

Preferable examples of the linear, branched or cyclic 2-oxoalkyl group represented by any one of R²⁰¹ to R²⁰³ include the alkyl groups as recited above which have >C=O in their respective 2-positions and the cycloalkyl groups as recited above which have >C=O in their respective 2-positions.
Preferable examples of the alkoxy moiety in the alkoxycarbonylmethyl group represented by any one of R²⁰¹ to R²⁰³ include an alkoxy group having 1 to 5 carbon atoms (such as a methoxy group, an ethoxy group, a propoxy group, a butoxy group or a pentoxy group).
The organic group represented by any one of R²⁰¹ to R²⁰³ may further be substituted with a halogen atom, an alkxoy group (such as an alkxoy group having 1 to 5 carbon atoms), a hydroxyl group, a cyano group or a nitro group.

Compound (b1-3) is a compound represented by the following Formula (b1-3), which is a compound having a phenacylsulfonium salt structure.

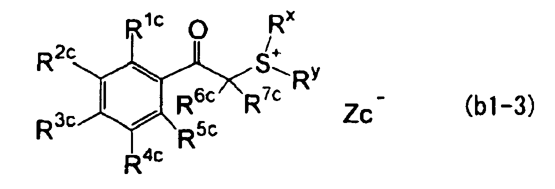

In Formula (b1-3), R^{1c} to R^{5c} each independently represent a hydrogen atom, an alkyl group, a cycloalkyl group, an alkoxy group or a halogen atom.
R^{6c} and R^{7c} each independently represent a hydrogen atom, an alkyl group or a cycloalkyl group.
R^{x} and R^{y} each independently represent an alkyl group, a cycloalkyl group, an allyl group or a vinyl group.
Any two or more ofR^{1c} to R^{5c}, any two or more of R^{6c} and R^{7c}, and two or more of R^{x} and R^{y} may be respectively bonded with each other to form a ring structure.
Zc represents a non-nucleophilic anion, and examples thereof include the same non-nucleophilic anions as those represented by X⁻ in Formula (b1).

The alkyl group represented by each ofR^{1c} to R^{7c} may have either a linear form or a branched form. Examples thereof include a linear or branched alkyl group having 1 to 20 carbon atoms, and preferable examples thereof include a linear or branched alkyl group having 1 to 12 carbon atoms (such as a methyl group, an ethyl group, a linear or branched propyl group, a linear or branched butyl group, or a linear or branched pentyl group).

The cycloalkyl group represented by each of R^{1c} to R^{7c} is preferably a cycloalkyl group having 3 to 8 carbon atoms (such as a cyclopentyl group or a cyclohexyl group).

The alkoxy group represented by each of R^{1c} to R^{5c} may have a linear or branched form, and examples thereof include an alkoxy group having 1 to 10 carbon atoms, and preferable examples thereof include a linear or branched alkoxy group having 1 to 5 carbon atoms (such as a methoxy group, an ethoxy group, a linear or branched propoxy group, a linear or branched butoxy group, or a linear or branched pentoxy group), and a cyclic alkoxy group having 3 to 8 carbon atoms (such as a cyclopentyloxy group or a cyclohexyloxy group).

Examples of the group (ring structure) formed by a combination of any two or more of R^{1c} to R^{5c}, a combination of R^{6c} and R^{7c}, or a combination of R^{x} and R^{y} include a butylene group and a pentylene group. The thus-formed ring structure may have an oxygen atom, a sulfur atom, an ester bond or an amide bond.

It is preferable that at least one ofR^{1c} to R^{5c} is a linear or branched alkyl group, a cycloalkyl group or a linear, branched or cyclic alkoxy group. It is further preferable that the total number of carbon atoms included in R^{1c} to R^{5c} is from 2 to 15. When the condition(s) are satisfied, the photo-acid generating agent may be further improved in terms of the solubility to a solvent and in terms of the prevention of generation of particles thereof during storage.

Examples of the alkyl group or the cycloalkyl group represented by R^{x} and/or R^{y} include the same ones as represented by each of R^{1c} to R^{7c}.
Each of R^{x} and R^{y} is preferably a 2-oxoalkyl group or an alkoxycarbonylmethyl group.
Examples of the 2-oxoalkyl group include groups having >C=O in the 2-positions of the alkyl group or the cycloalkyl group represented by R^{1c} to R^{5c}.
Examples of an alkoxy group in the alkoxycarbonylmethyl group include the same ones as the alkoxy group represented by each ofR^{1c} to R^{5c}.

Each of R^{x} and R^{y} preferably represents an alkyl group having 4 or more carbon atoms or a cycloalkyl group having 4 or more carbon atoms, more preferably represents an alkyl group having 6 or more carbon atoms or a cycloalkyl group having 6 or more carbon atoms, and further preferably represents an alkyl group having 8 or more carbon atoms or a cycloalkyl group having 8 or more carbon atoms.

In Formulae (b2) and (b3), R²⁰⁴ to R²⁰⁷ each independently represent an aryl group, an alkyl group or a cycloalkyl group. X- represents a non-nucleophilic anion, and examples thereof include the same ones as represented by X- in Formula (b1).

The aryl group represented by each of R²⁰⁴ to R²⁰⁷ is preferably a phenyl group or a naphthyl group, and is more preferably a phenyl group.
The alkyl group represented by each of R²⁰⁴ to R²⁰⁷ may have either a linear form or a branched form, and preferable examples thereof include linear or branched alkyl groups having 1 to 10 carbon atoms (e.g., a methyl group, an ethyl group, a propyl group, a butyl group, a pentyl group). Preferable examples of the cycloalkyl group represented by each of R²⁰⁴ to R²⁰⁷ include a cycloalkyl group having 3 to 10 carbon atoms (such as a cyclopentyl group, a cyclohexyl group, or a norbornyl group).
Each of R²⁰⁴ to R²⁰⁷ may have a substituent, and examples thereof include an alkyl group (such as those having 1 to 15 carbon atoms), a cycloalkyl group (such as those having 3 to 15 carbon atoms), an aryl group (such as those having 6 to 15 carbon atoms), an alkoxy group (such as those having 1 to 15 carbon atoms), a halogen atom, a hydroxyl group and a phenylthio group.

Examples of the photo-acid generating agent (namely, a compound capable of generating an acid upon irradiation with actinic rays or radiation) which may be used in the invention further include compounds represented by any one of the following Formulae (b4), (b5) and (b6).

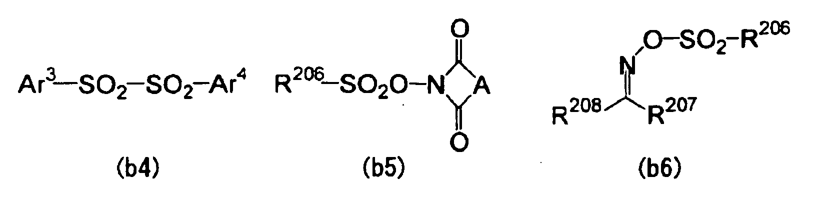

In Formulae (b4) to (b6), Ar³ and At⁴ each independently represent an aryl group.
In Formulae (b5) and (b6), R²⁰⁶, R²⁰⁷ and R²⁰⁸ each independently represent an alkyl group, a cycloalkyl group or an aryl group.
In Formula (b5), A represents an alkylene group, an alkenylene group or an arylene group.

Among the photo-acid generating agents illustrated above, the compounds represented by any one of Formulae (b1) to (b3) are preferably used in the invention.

Specific examples (b-1) to (b-96), which are preferably used as the (B) photo-acid generating agent in the invention, are illustrated below, while these examples should not construed as limiting the scope of the invention.

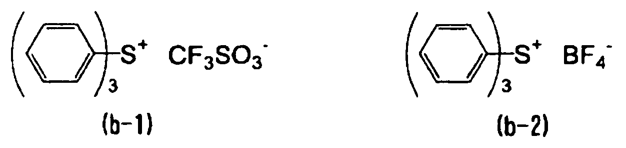

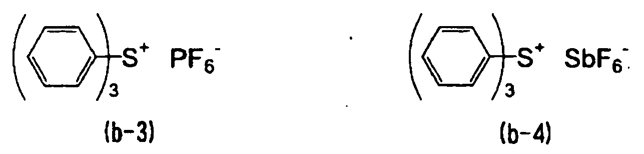

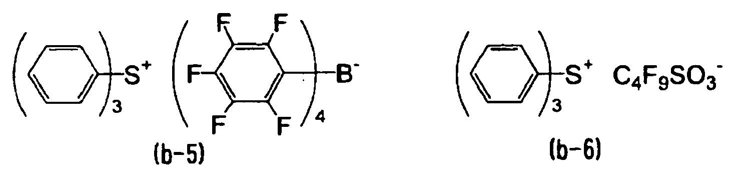

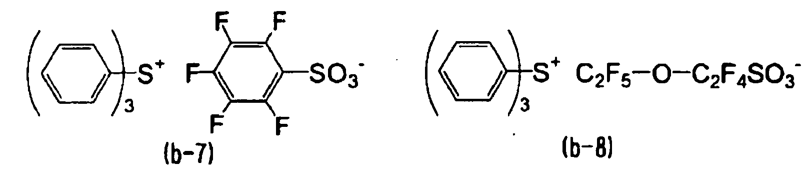

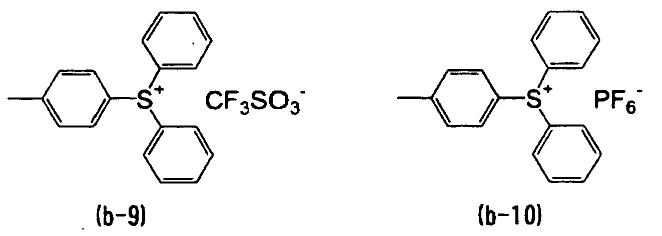

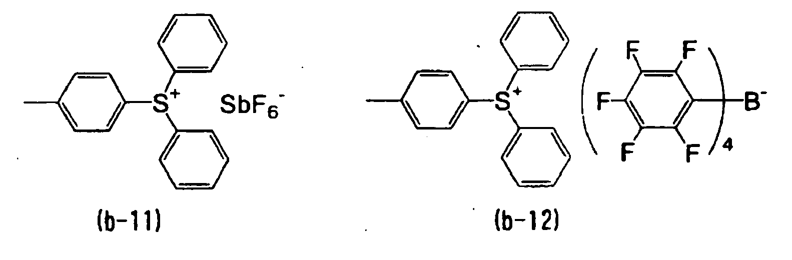

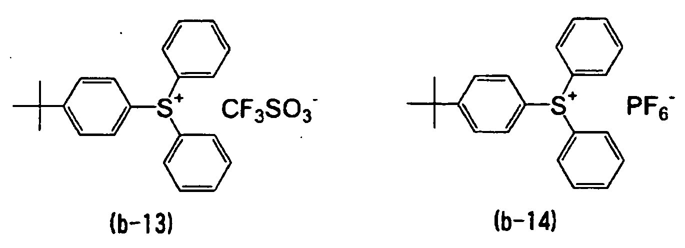

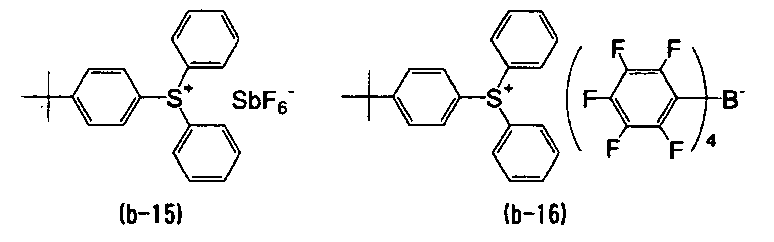

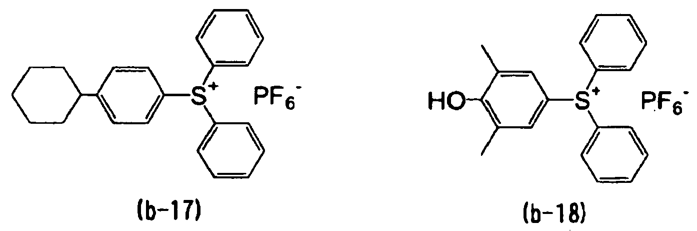

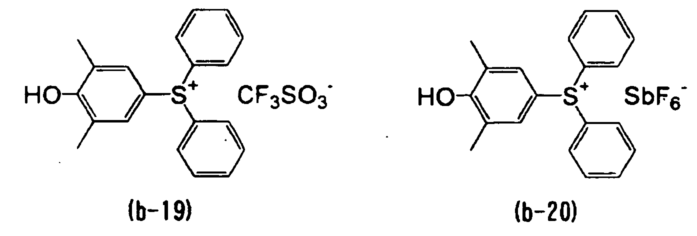

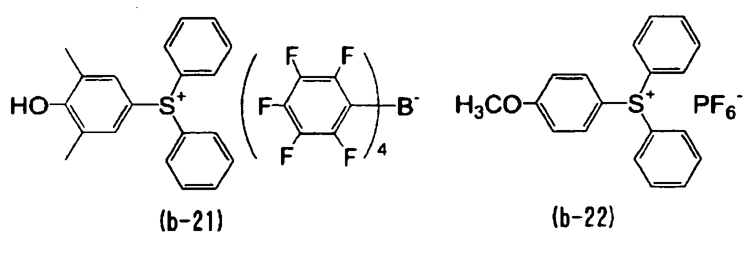

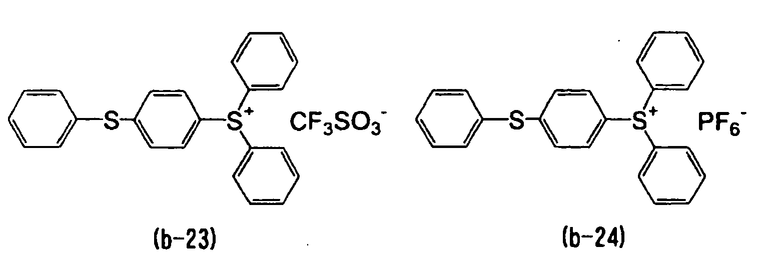

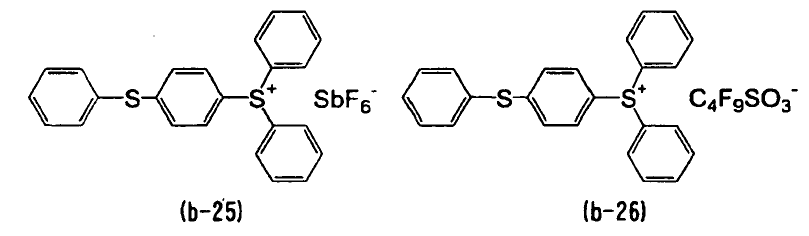

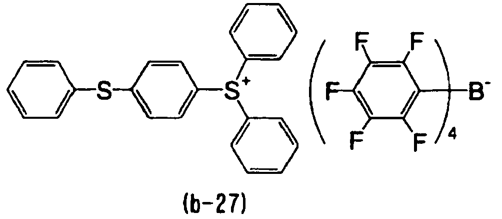

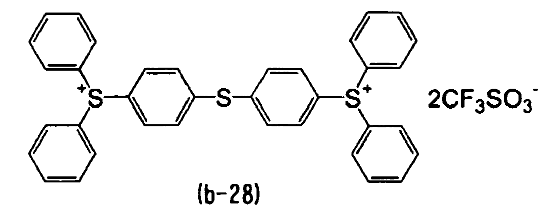

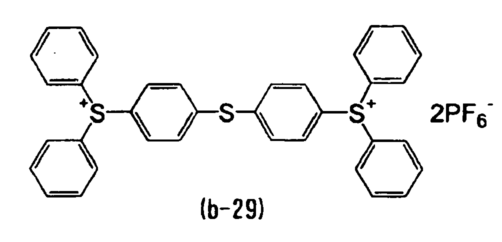

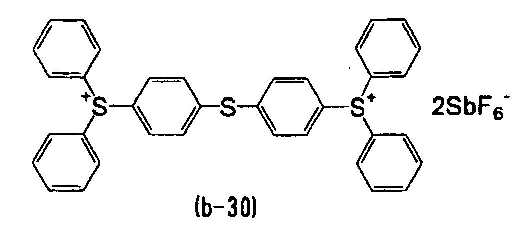

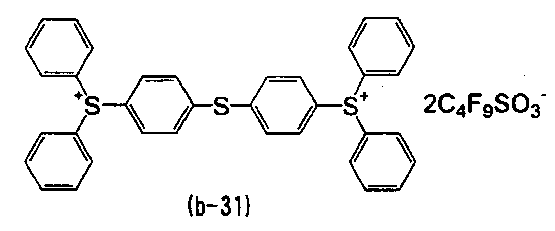

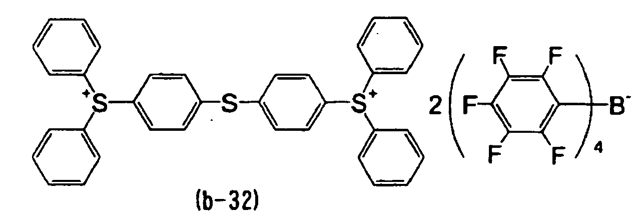

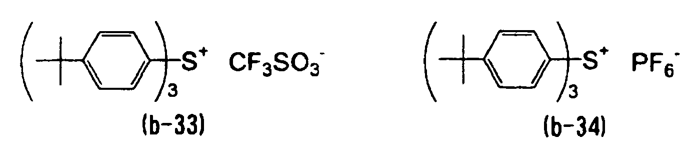

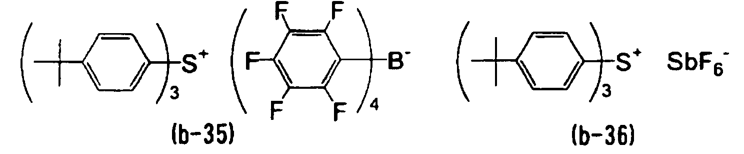

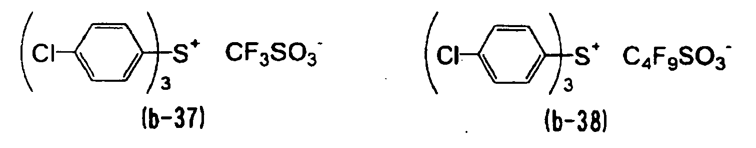

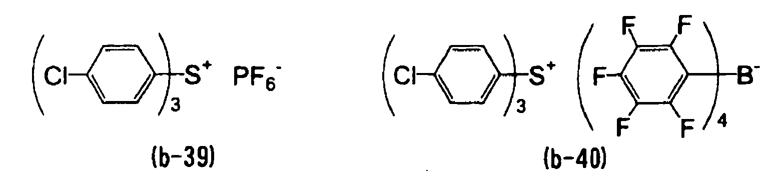

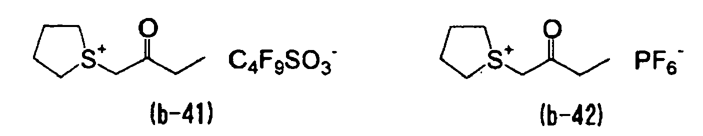

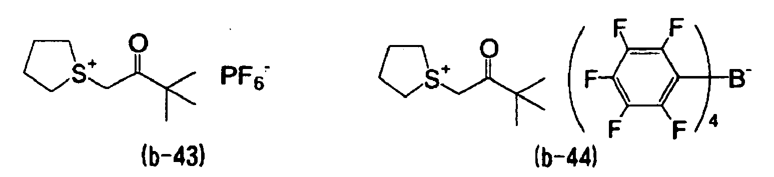

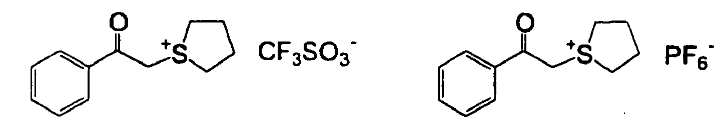

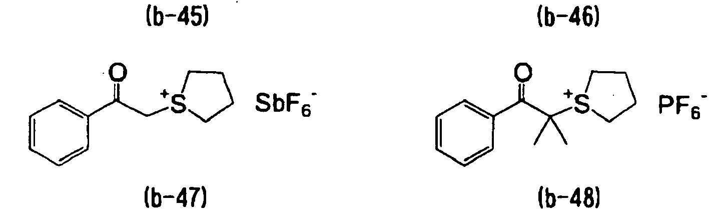

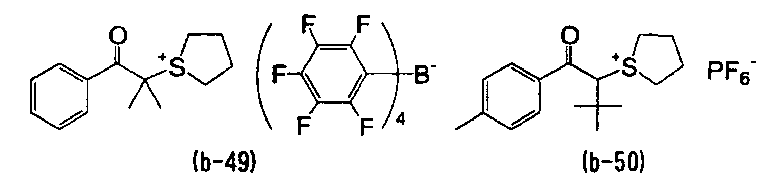

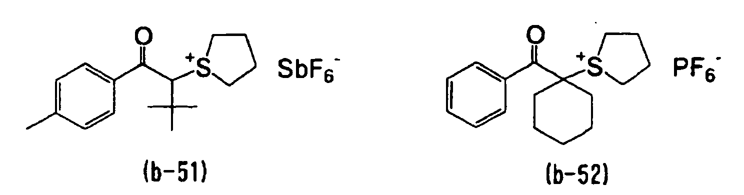

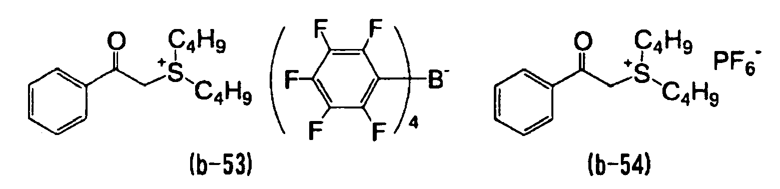

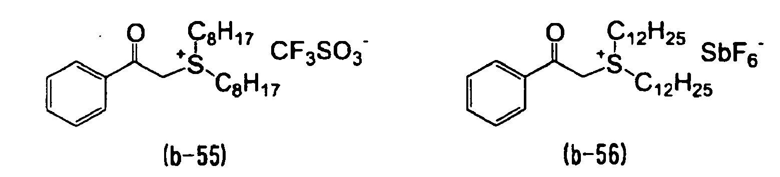

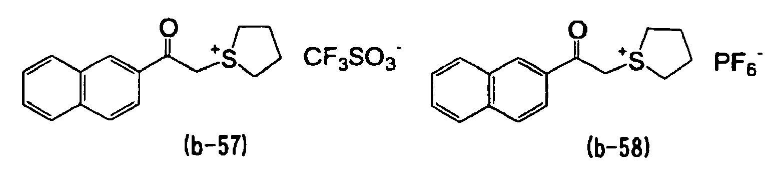

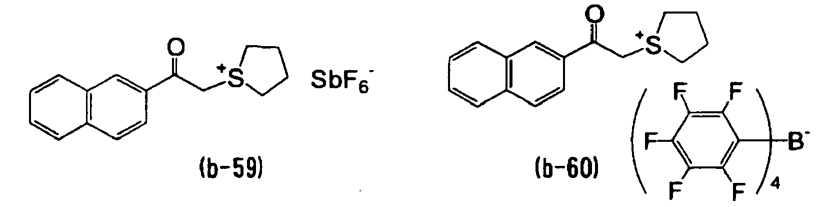

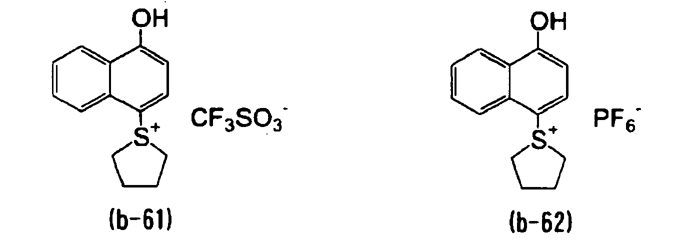

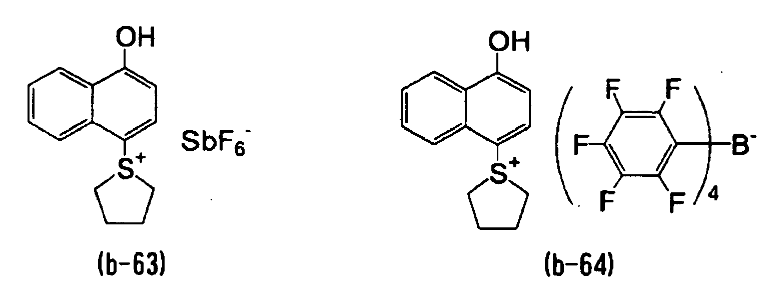

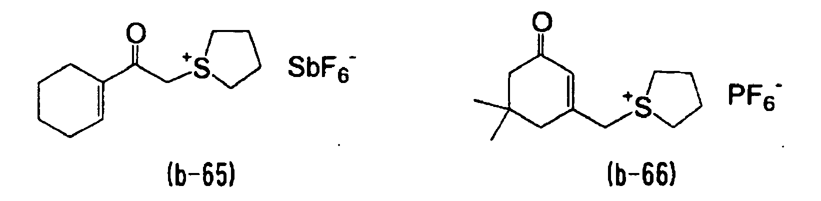

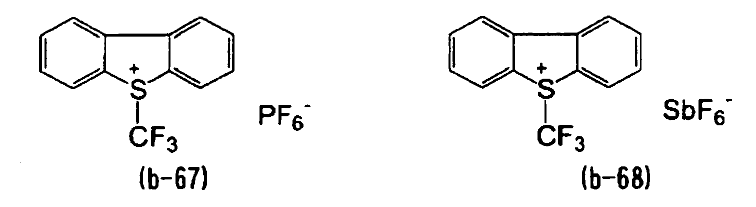

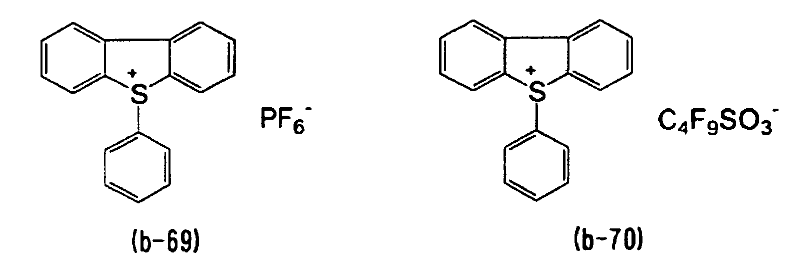

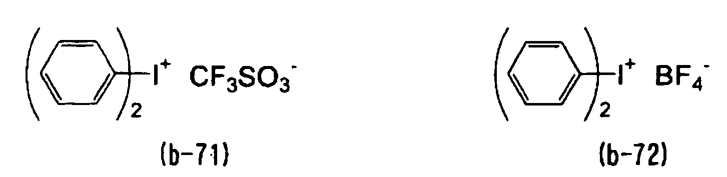

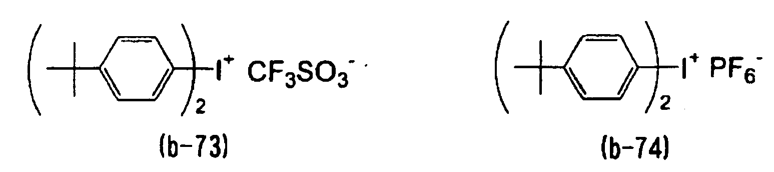

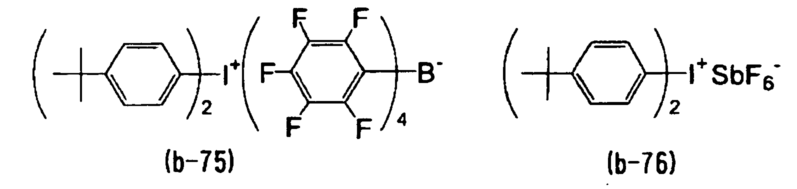

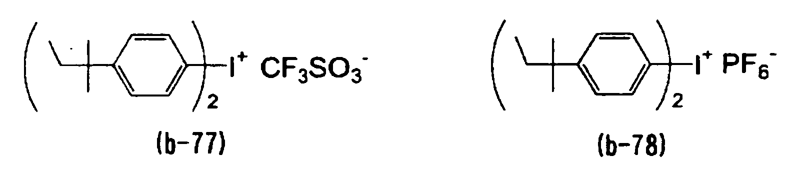

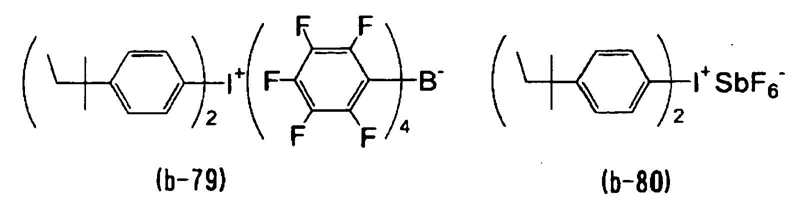

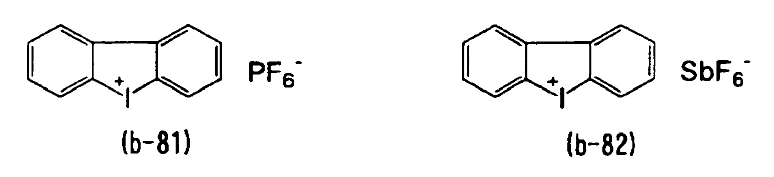

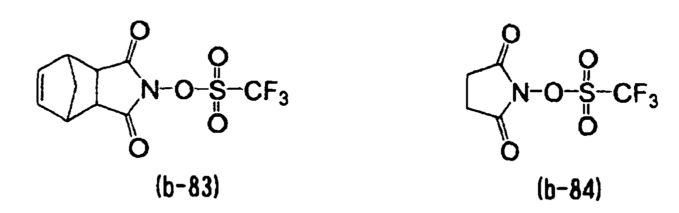

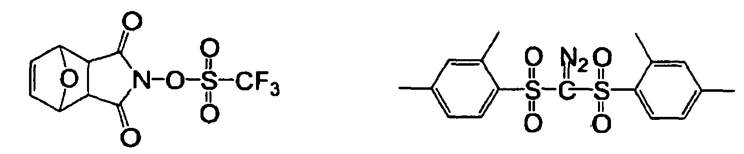

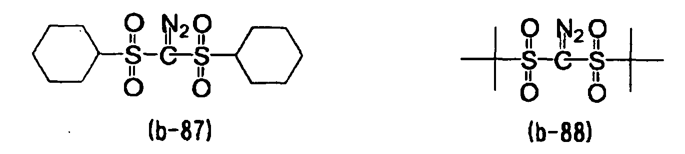

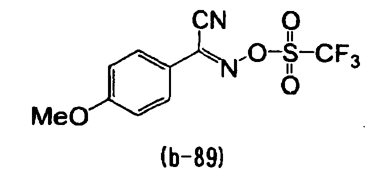

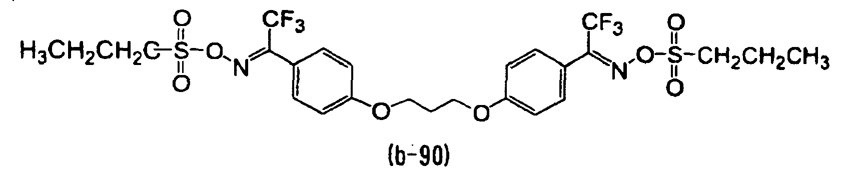

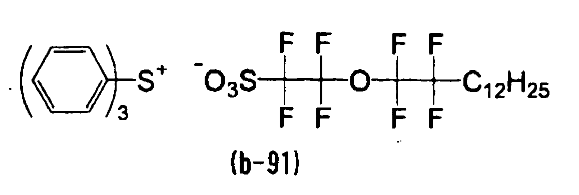

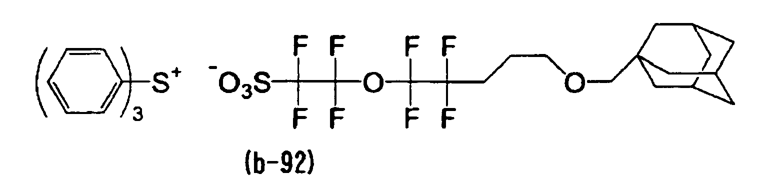

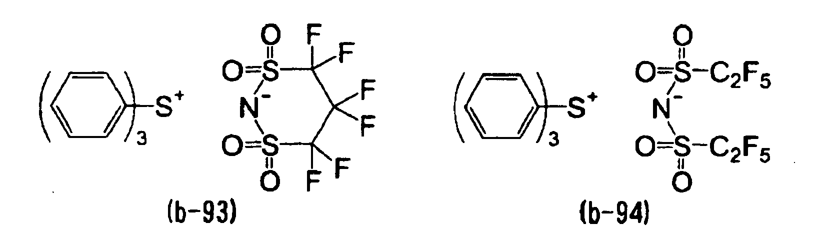

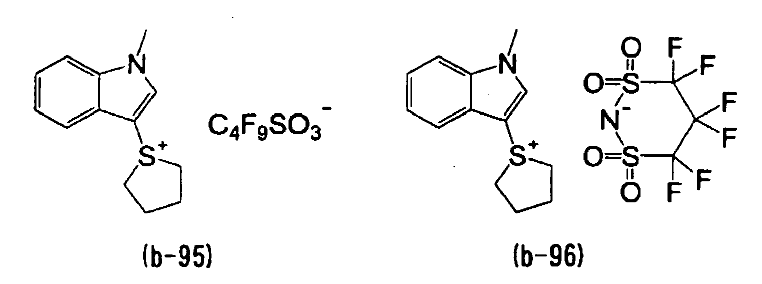

In addition, the oxazole compounds and the s-triazine compounds described in paragraphs [0029] and [0030] of JP-A No. 2002-122994 can be also preferably used as the photo-acid generating agent in the invention. Furthermore, the onium salt compounds and the sulfonate compounds illustrated in paragraphs [0037] to [0063] of JP-A No. 2002-122994 can be also preferably used as the photo-acid generating agent in the invention.

The (B) photo-acid generating agent may be used singly or in a combination of two or more thereof in the invention.
The amount of the (B) photo-acid generating agent in the ink composition of the invention is preferably from 0.1 to 20 % by mass, more preferably from 0.5 to 10 % by mass, and is further preferably from 1 to 7 % by mass, based on the total solid content of the ink composition.

Cationic polymerizable compound (C) There is no particular restriction to the cationic polymerizable compound (C) used in the invention as long as it is a compound capable of causing polymerization reaction by an acid generated from the (B) photo-acid generating agent and being cured, and any of various cationic polymerizable monomers hitherto known as cationic photopolymerizable monomers can be used. Examples of a cationic polymerizable monomer usable as the cationic polymerizable compound (C) include the epoxy compounds, the vinyl ether compounds and the oxetane compounds described in JP-A Nos. 6-9714, 2001-31892, 2001-40068, 2001-55507, 2001-310938, 2001-310937 or 2001-220526.

Examples of the epoxy compounds include an aromatic epoxide, an alicyclic epoxide and an aliphatic epoxide.
Examples of the aromatic epoxide include a di- or polyglycidyl ether produced by reaction of a polyphenol having at least one aromatic nucleus or alkylene oxide adducts thereof with epichlorohydrin, and examples thereof include a di- or polyglycidyl ether of bisphenol A or an alkylene oxide adduct thereof, a di- or polyglycidyl ether of hydrogenated bisphenol A or an alkylene oxide adduct thereof, and novolac epoxy resins. Herein, examples of the alkylene oxide include ethylene oxide, propylene oxide and the like.

Preferable examples of the alicyclic epoxide include cyclohexene oxide- or cyclopentene oxide-containing organic compounds, which are produced by epoxidizing compounds having at least one of cycloalkene, such as cyclohexene or cyclopentene, by using an appropriate oxidizing agent such as hydrogen peroxide or a peracid.

Examples of the aliphatic epoxide include di- or polyglycidyl ethers of aliphatic polyhydric alcohol compounds or alkylene oxide adducts thereof. Representative examples of these ethers include an alkylene glycol diglycidyl ether such as ethylene glycol diglycidyl ether, propylene glycol diglycidyl ether or 1,6-hexanediol diglycidyl ether, polyglycidyl ether of polyhydric alcohol such as di- or triglycidyl ether of glycerin or an alkylene oxide adduct thereof, and a polyalkylene glycol diglycidyl ether typified by diglycidyl ether of polyethylene glycol or an alkylene oxide adduct thereof, or diglycidyl ether of polypropylene glycol or an alkylene oxide adduct thereof. Herein, examples of the alkylene oxide inlcude ethylene oxide, propylene oxide and the like.

The epoxy compounds may be either monofunctional or multifunctional.
Examples of the monofunctional epoxy compound usable in the invention include phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Examples of the multifunctional epoxy compound usable in the invention include diglycidyl ether of bisphenol A, diglycidyl ether of bisphenol F, diglycidyl ether of bisphenol S, diglycidyl ether of brominated bisphenol A, diglycidyl ether of brominated bisphenol F, diglycidyl ether of brominated bisphenol S, epoxy novolc resin, hydrogenated diglycidyl ether of bisphenol A, hydrogenated diglycidyl ether of bisphenol F, hydrogenated diglycidyl ether of bisphenol S, 3,4-epoxycyclohexylmethyl-3',4'-epoxycyclohexane carboxylate, 2-(3,4-epoxycyclohexyl-5,5-spiro-3,4-epoxy)cyclohexane-meta-dioxane, bis(3,4-epoxycyclohexylmethyl)adipate, vinylcyclohexene oxides, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexane carboxylate, methylenebis(3,4-epoxycyclohexane), dicyclopentanediene diepoxide, ethylene glycol di(3,4-epoxycyclohexylmethyl) ether, ethylenebis(3,4-epoxycyclohexane carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ether, 1,1,3-tetradecadiene dioxide, limonene dioxide, 1,2,7,8-diepoxyoctane and 1,2,5,6-diepoxycyclooctane.

Among these epoxy compounds, from the viewpoint of superiority in curing speed, aromatic epoxides and alicyclic epoxides are preferable, and alicyclic epoxides are particularly preferable.

Examples of the vinyl ether compounds include di- or trivinyl ether compounds including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether, or monovinyl ether compounds including ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyk ether, n-propyl vinyl ether, isopropyl vinyl ether, isopropenylether-O-propylene carbonate, dodecyl vinyl ether, diethylene glycol monovinyl ether and octadecyl vinyl ether.

The vinyl ether compound may be either monofunctional or multifunctional.
Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether and phenoxypolyethylene glycol vinyl ether.

Examples of the multifunctional vinyl ether include a divinyl ether, such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether or bisphenol F alkylene oxide divinyl ether; and a multifuctional vinyl ether, such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerithritol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythritol tetravinyl ether, propylene oxide-added pentaerythritol tetravinyl ether, ethylene oxide-added dipentaerythritol hexavinyl ether or propylene oxide-added dipentaerythritol hexavinyl ether.

Among these vinyl ether compounds, from the viewpoints of curability, adhesion to recording materials and surface hardness of images formed, the di- or trivinyl ether compounds are preferable, and the divinyl ether compounds are particularly preferable.

The "oxetane compound" which can be used in the invention refers to a compound having an oxetane ring, and examples of the oxetane compound include those arbitrarily selected from known oxetane compounds such as those described in JP-ANos. 2001-220526, 2001-310937 and 2003-341217.
A compound having 1 to 4 oxetane rings in their respective structures can be preferably used as the oxetane ring-containing compound in the ink composition of the invention. Utilization of such compounds enables easily keeping a viscosity of the composition being within the range to ensure good handling and achieving high adhesion between the ink composition after curing and a recording material.

Examples of an oxetane compound having one or two oxetane rings in a molecule include compounds represented by any one of the following Formulae (1) to (3).

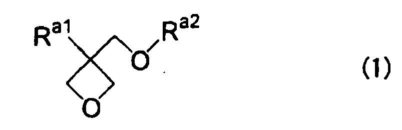

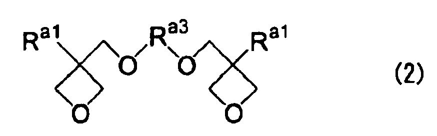

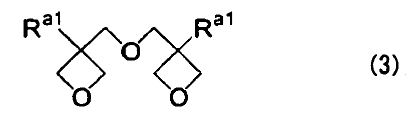

In Formulae (1) to (3), R^{a1} represents a hydrogen atom, an alkyl group having 1 to 6 carbon atoms, a fluoroalkyl group having 1 to 6 carbon atoms, an allyl group, an aryl group, a furyl group or a thienyl group. When two R^{a1}s are present in a molecule, they may be the same or different. Examples of the alkyl group include a methyl group, an ethyl group, a propyl group and a butyl group. Examples of the fluoroalkyl group include a methyl group, an ethyl group, a propyl group and a butyl group, at least one hydrogen atom of each of which is substituted with a fluorine atoms.

In Formula (1), R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an N-alkylcarbamoyl group having 2 to 6 carbon atoms. Examples of the alkyl group include a methyl group, an ethyl group, a propyl group and a butyl group. Examples of the alkenyl group include a 1-propenyl group, a 2-propenyl group, a 2-methyl-1-propenyl group, a 2-methyl-2-propenyl group, a 1-butenyl group, a 2-butenyl group and a 3-butenyl group. Examples of the group having an aromatic ring include a phenyl group, a benzyl group, a fluorobenzyl group, a methoxybenzyl group and a phenoxyethyl group. Examples of the alkylcarbonyl group include an ethylcarbonyl group, a propylcarbonyl group and a butylcarbonyl group. Examples of the alkoxycarbonyl group include an ethoxycarbonyl group, a propoxycarbonyl group and a butoxycarbonyl group.
Examples of the N-alkylcarbamoyl group include an ethylcarbamoyl group, a propylcarbamoyl group, a butylcarbamoyl group and a pentylcarbamoyl group.

In Formula (2), R^{a3} represents a linear or branched alkylene group, a linear or branched poly(alkyleneoxy) group, a linear or branched unsaturated hydrocarbon group, a carbonyl group or a carbonyl group-containing alkylene group, a carboxyl group-containing alkylene group, a carbamoyl group-containing alkylene group, or any of groups illustrated below. Examples of the alkylene group include an ethylene group, a propylene group and a butylene group. Examples of the poly(alkyleneoxy) group include a poly(ethyleneoxy) group and a poly(propyleneoxy) group. Examples of the unsaturated hydrocarbon group include a propenylene group, a methylpropenylene group and a butenylene group.

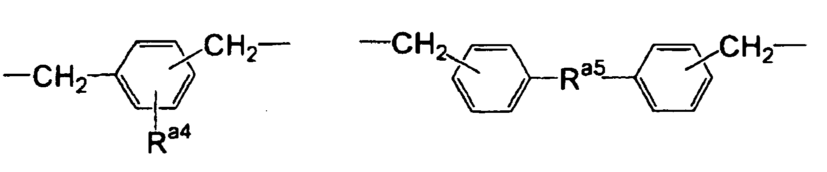

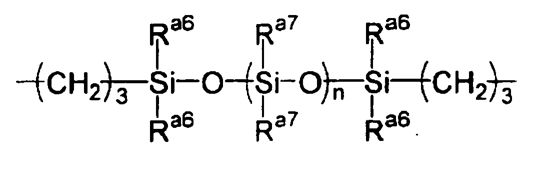

In the polyvalent group, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group or a carbamoyl group.
R^{a5} represents an oxygen atom, a sulfur atom, a methylene group, -NH-, -SO-, -SO₂-, -C(CF₃)₂-, or -C(CH₂)₂-.
R^{a6} represents an alkyl group having 1 to 4 carbon atoms or an aryl group, and n represents an integer from 0 to 2,000.
R^{a7} represents an alkyl group having 1 to 4 carbon atoms, an aryl group, or a monovalent group having the following structure.

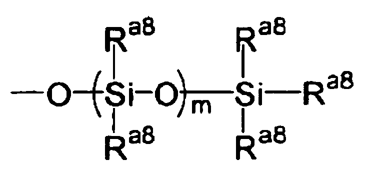

In the monovalent group, R^{a8} represents an alkyl group having 1 to 4 carbon atoms, or an aryl group, and m represents an integer from 0 to 100.

Examples of an oxetane compound having 3 or 4 oxetane rings include compounds represented by the following Formula (4).

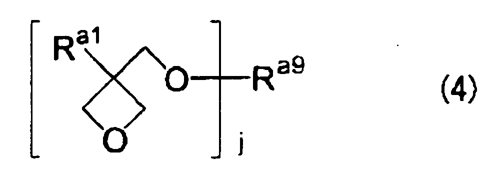

In Formula (4), R^{a1} has the same meaning as the R^{a1} in Formula (1), R^{a9} is a polyvalent linkage group. Examples of the polyvalent linkage group represented by R^{a9} include a branched alkylene group having 1 to 12 carbon atoms such as those illustrated by the any one of the following Formulae A to C, a branched poly(alkyleneoxy) group such as those illustrated by the following Formula D, and a branched polysiloxy group such as those illustrated by the following Formula E. j is 3 or 4.

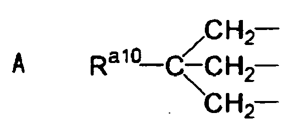

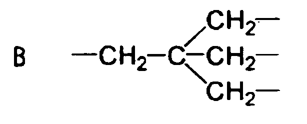

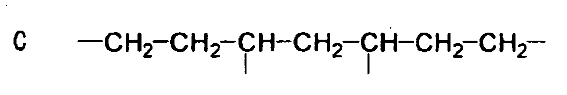

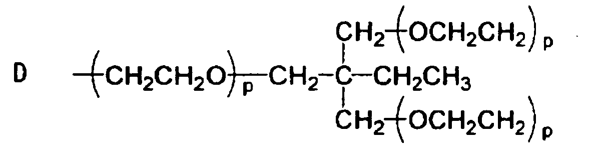

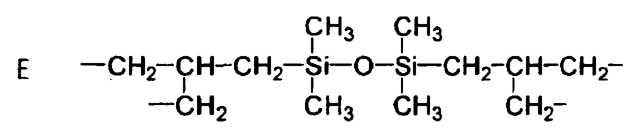

In Formula A, R^{a10} represents a methyl group, an ethyl group or a propyl group. In the Formula D, p is an integer from 1 to 10.

Examples of the oxetane compounds which can be preferably used in the invention further include a compound having an oxetane ring(s) as a side chain(s) thereof such as that illustrated by the following Formula (5).

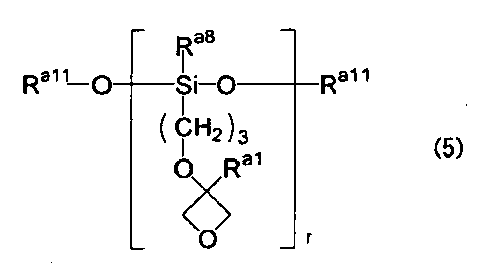

In Formula (5), R^{a8} has the same meaning as the R^{a8} in Formula (4), R^{a11} represents an alkyl group having 1 to 4 carbon atoms, such as a methyl group, an ethyl group, a propyl group or a butyl group, or a trialkylsilyl group, and r is an integer from 1 to 4.

The oxetane ring-containing compounds as recited above are mentioned in detail in paragraphs [0021] to [0084] of JP-A No. 2003-341217, and the compounds mentioned therein can be preferably used in the invention.
Among these oxetane compounds, the compound having one oxetane ring can be more preferably used from the viewpoints of viscosity and tackiness of the composition.

While the cationic polymerizable monomers may be used singly or in a combination of any two or more thereof in the ink composition of the invention, from the viewpoint of effectively inhibiting shrinkage at ink curing time, it is preferable to use a vinyl ether compound and at least one compound selected from oxetane compounds or epoxy compounds in combination.
The amount of the cationic polymerizable compound (C) in the composition of the invention is appropriately from 10 to 95 % by mass, preferably from 30 to 90 % by mass, and is more preferably from 50 to 85 % by mass, based on the amount of the total solids in the ink composition.

Coloring agent (D) The ink composition of the invention includes a coloring agent. The addition of the coloring agent to the ink composition enables formation of visible images. Although addition of the coloring agent to the ink composition is not necessarily required in cases such as when an image area is formed therewith on a planographic printing plate, it can be advantageous from the viewpoint of easiness in the planographic printing plate made.
There is no particular restriction to the coloring agent usable in the invention, and various known coloring agents (pigments and dyes) can be appropriately selected and used according to the intended uses. For instance, in the case of forming images excellent in weather resistance, a pigment is preferably used as the coloring agent. While either a water-soluble dye or an oil-soluble dye can be used as the coloring agent, an oil-soluble dye is preferably used in the ink composition of the invention.

Pigment There is no particular limitation to the pigment which can be used in the invention, and examples thereof include all of commercially available organic pigments and inorganic pigments, which may be dispersed in a dispersion media such as an insoluble resin. The surface of the pigment may be grafted with a resin. The pigment may be a resin particle colored with dyes.
Examples of the pigment include those described, e.g., in Seishiro Itoh, Ganryo no Jiten (published in 2000), W. Herbst & K. Hunger, Industrial Organic Pigments, JP-A No. 2002-12607, 2002-188025, 2003-26978 or 2003-342503.

The organic or inorganic pigment usable in the invention may exhibit any color such as yellow, red, magenta, blue, cyan, green, orange, black, white or the like according to necessity.
Specific examples of yellow pigment include: monoazo pigments such as C.I. Pigment Yellow 1 (e.g., Fast Yellow G) or C.I. Pigment Yellow 74; dis-azo pigments, such as C.I. Pigment Yellow 12 (e.g., Dis-azo Yellow AAA) or C.I. Pigment Yellow 17; non-benzidine azo pigments such as C.I. Pigment Yellow 180; azo lake pigments such as C.I. Pigment Yellow 100 (e.g., Tartrazine Yellow lake); condensed azo pigments such as C.I. Pigment Yellow 95 (e.g., condensed Azo Yellow GR); acidic dye lake pigments such as C.I. Pigment Yellow 115 (e.g., Quinoline Yellow lake); basic dye lake pigments such as C.I. Pigment Yellow 18 (e.g., Thioflavin lake); anthraquinone pigments such as Flavanthrone Yellow (Y-24); isoindolenone pigments such as Isoindolinone Yellow 3RLT (Y-110); quinophthalone pigments such as Quinophthalone Yellow (Y-138); isoindoline pigments such as Isoindoline Yellow (Y-139); nitroso pigments such as C.I. Pigment Yellow 153 (e.g., Nickel Nitroso Yellow); and metal-complex azomethine pigments such as C.I. Pigment Yellow 117 (e.g., Cupper-azomethine Yellow).

Examples of red or magenta pigment include: monoazo pigments such as C.I. Pigment Red 3 (e.g., Toluidine Red); dis-azo pigments such as C.I. Pigment Red 38 (e.g., Pyrazolone Red B); azo lake pigments such as C.I. Pigment Red 53:1 (e.g., Lake Red C) or C.I. Pigment Red 57:1 (e.g., Brilliant Carmine 6B); condensed azo pigments such as C.I. Pigment Red 144 (e.g., condensed Azo Red BR); acidic dye lake pigments such as C.I. Pigment Red 174 (e.g., Phloxine B Lake); basic dye lake pigments such as C.I. Pigment Red 81 (e.g., Rhodamine 6G' Lake); anthraquinone pigments such as C.I. Pigment Red 177 (e.g., Dianthraquinonyl Red); thioindigo pigments such as C.I. Pigment Red 88 (e.g., Thioindigo Bordeaux); perynone pigments such as C.I. Pigment Red 194 (e.g., Perynone Red); perylene pigments such as C.I. Pigment Red 149 (e.g., Perylene Scarlet); quinacridone pigments such as C.I. Pigment Violet 119 (unsubstituted quinacridone) or C.I. Pigment Red 122 (e.g., Quinacridone Magenta); isoindolinone pigments such as C.I. Pigment Red 180 (e.g., Isoinsolinone Red 2BLT); and alizarin lake pigments such as C.I. Pigment Red 83 (e.g., Madder Lake).

Examples of blue or cyan pigment include: dis-azo pigments such as C.I. Pigment Blue 25 (e.g., Dianisidine Blue); phthalocyanine pigments such as C.I. Pigment Blue 15 (e.g., Phthalocyanine Blue); acidic dye lake pigments such as C.I. Pigment Blue 24 (e.g., Peacock Blue Lake); basic dye lake pigments such as C.I. Pigment Blue 1 (e.g., Bichlothia Pure Blue BO Lake); anthraquinone pigments such as C.I. Pigment Blue 60 (e.g., Indanthrone Blue); and alkali blue pigments such as C.I. Pigment Blue 18 (e.g., Alkali Blue V-5:1).

Examples of green pigment include phthalocyanine pigments such as C.I. Pigment Green 7 (Phthalocyanine Green) or C.I. Pigment Green 36 (Phthalocyanine Green); and azo-metal complex pigments such as C.I. Pigment Green 8 (Nitroso Green).
Examples of orange pigment include: isoindoline pigments such as C.I. Pigment Orange 66 (Isoindoline Orange); and anthraquinone pigments such as C.I. Pigment Orange 51 (Dichloropyranthrone Orange).

Examples of black pigment include carbon black, titan black and aniline black.
Examples of white pigment usable in the invention include basic carbonate white lead (2PbCO₃Pb(OH)₂ known as silver white), zinc oxide (ZnO known as zinc white), titanium oxide (TiO₂ known as titanium white), strontium titanate (SrTiO₃ known as titanium strontium white).

Since titanium oxide has a lower specific gravity, a higher refractive index, and a higher physical stability as compared with other white pigments, titanium oxide can provide a greater masking ability and coloring ability as pigment, and higher durability agaisnt acid, alkali and other adverse environments. Accordingly, titanium oxide can be preferably used as white pigment in the invention. Other white pigments (including those which are not recited above) may also be used as required.

Dispersing of the pigment can be performed by using a dispersing apparatus such as a ball mill, a sand mill, an attrition mill, a roll mill, a jet mill, a homogenizer, a paint shaker, a kneader, an agitator, a Henschel mixer, a colloid mill, a ultrasonic homogenizer, a pearl mill, a wet jet mill or the like.
A dispersing agent can be add to the pigment when dispersing the pigment. Examples of the dispersing agent include hydroxyl group-containing carboxylic acid esters, salts of long-chain polyaminoamide high-molecular-weight acid esters, high-molecular-weight polycarboxylic acid salts, high-molecular-weight unsaturated acid esters, high-molecular copolymers, modified polyacrylates, aliphatic polycarboxylic acids, naphthalenesulfonic acid-formaldehyde condensates, polyoxethylene alkylphosphoric acid esters, and pigment compounds. In addition, commercially available polymeric dispersing agents, such as SOLSPERSE^{®} Series (manufactured by Zeneca), can also be preferable used.
Furthermore, it is also possible to use, as a dispersing aid, a synergist which is appropriate to the pigment to be used. The dispersing agent and the dispersing aid are preferably added in an amount of 1 to 50 parts by mass relative to 100 parts by mass of the pigment.
In the ink composition, a solvent may be additionally used as a dispersing medium for various ingredients including pigment. Alternatively, the cationic polymerizable compound (C), which is a low-molecular-weight ingredient, may be utilized as a dispersing medium without using any solvent. Since the ink composition provided by the invention is a radiation curable ink which is cured after application to a recording material. In a case where a solvent remains in a cured image, the cured image may cause problem such as deterioration in resistance against solvents or a residual volatile organic compound (VOC). In consideration of these, the ink composition of the invention is preferably solvent-free. It is preferable to use the cationic polymerizable compound (C) as the dispersing medium, and it is specifically preferable to select a cationic polymerizable monomer having lowest viscosity, from the viewpoints of suitability to dispersing and improvement in handling of the ink composition.

The average particle size of the pigment is preferably in a range of 0.02 to 0.4 µm, is more preferably in a range of 0.02 to 0.1 µm, and is further preferably in a range of 0.02 to 0.7 µm.
The selections of the pigment, a dispersing agent and a dispersing medium and the settings of conditions for dispersing and filtrating can be made so that the average pigment particle size falls within the range specified above. When the particle size is controlled as above, clogging of head nozzles can be prevented, and storage stability, transparency and curing sensitivity of the ink composition can be maintained.

Dye A dye which can be used in the invention is preferably an oil-soluble dye. The "oil-soluble dye" specifically refers to a dye having the water solubility (an amount by mass of the dye dissolved in 100 g of water) of 1 g or less at 25°C. The water solubility of the dye which can be used in the invention at 25°C is preferably 0.5 g or less, and is more preferably 0.1 g or less. Accordingly, dyes which are known as water-insoluble, oil-soluble dyes can be preferably used in the invention.

An oil-solubilizing group, which is capable of imparting, to the dye, a solubility to oil, may be preferably introduced into mother nuclei of the dye used in the invention for the purpose of dissolving a required amount of the dye into the ink composition.
Examples of the oil-solubilizing group include long-chain and branched alkyl groups, long-chain and branched alkoxy groups, long-chain and branched alkylthio groups, long-chain and branched alkylsulfonyl groups, long-chain and branched acyloxy groups, long-chain and branched alkoxycarbonyl groups, long-chain and branched acyl groups, long-chain and branched acylamino groups, long-chain and branched alkylsulfonylamino groups, long-chain and branched alkylaminosulfonyl groups, and aryl, aryloxy, aryloxycarbonyl, arylcarbonyloxy, arylaminocarbonyl, arylaminosulfonyl and arylsulfonylamino groups each having as substituent(s) any of the long-chain and branched groups recited above.
The dye used in the invention may be obtained from water-soluble dyes having carboxylic or sulfonic acid groups by convering an acid group(s) thereof into an oil-solubilizing groups such as an alkoxycarbonyl group, an aryloxycarbonyl group, an alkylaminosulfonyl group or arylaminosulfonyl group by using long-chain or branched alcohol, amine, phenol or an aniline compound.

A melting point of the oil-soluble dye is preferably 200°C or less, more preferably 150°C or less, and further preferably 100°C or less. By using an oil-soluble dye having a low melting point, precipitation of a crystallized colorant in the ink composition can be suppressed and improvement in storage stability of the ink composition can be achieved.
In addition, it is preferable that the oxidation potential of the oil-soluble dye used in the invention is noble (high) for the purpose of improving resistance to discoloration, and particularly for the purpose of improving resistance to an oxidizing substance like ozone, and improving curing properties. Therefore, the oxidation potential of the oil-soluble dye used in the invention is preferably 1.0 V (with respect to SCE) or more. The higher oxidation potential is the more preferable. the oxidation potential of the oil-soluble dye used in the invention is more preferably 1.1 V (with respect to SCE) or more, are is further preferably 1.15 V (with respect to SCE) or more.

Preferable examples of the yellow dye include compounds represented by the formula (Y-I) described in JP-A No. 2004-250483.
Particularly preferable examples of the dye include those represented by any one of the formulae (Y-II) to (Y-IV) described in the paragraph [0034] of JP-A No. 2004-250483, and specific examples thereof include the compounds shown in paragraphs [0060] to [0071] of JP-A No. 2004-250483. The oil-soluble dyes of the formula (Y-1) described in JP-A No. 2004-250483 may be used not only in an yellow ink but also in inks of any color including a black ink, a red ink and so on.

Preferable examples of the magenta dye include compounds represented by any one of the formulae (3) and (4) described in JP-A No. 2002-114930, and specific examples thereof include the compounds shown in the paragraphs [0054] to [0073] of JP-A No. 2002-114930.
Particularly preferable examples of the magenta dye include those represented by any one of the formulae (M-1) and (M-2) described in the paragraphs [0084] to [0122] of JP-A No. 2002-121414, and specific examples thereof include the compounds shown in the paragraphs [0123] to [0132] of JP-A No. 2002-121414. The oil-soluble dyes of formulae (3), (4), and (M-1) to (M-2) described in JP-A No. 2002-121414 may be used not only in a magenta ink but also in inks of any color including a black ink, a red ink and so on.

Preferable examples of the cyan dye include those represented by any one of the formulae (I) to (IV) described in JP-A No. 2001-181547 those represented by any one of the formulae (IV-1) to (IV-4) described in the paragraphs [0063] to [0078] of JP-A No. 2002-121414, and specific examples thereof include the compounds shown in the paragraphs [0052] to [0066] of JP-ANo. 2001-181547 and the paragraphs [0079] to [0081] of JP-A No. 2002-121414.
Particularly preferable examples of the cyan dye include the phthalocyanine dyes represented by any one of the formulae (C-I) and (C-II) described in the paragraphs [0133] to [0196] of JP-A No. 2002-121414s, and among these, the phthalocyanine dyes represented by the formula (C-II) are further preferable. Specific examples of these dyes include the compounds shown in the paragraphs [0198] to [0201] of JP-A No. 2002-121414. The oil-soluble dyes of any one of the formulae (I) to (IV), (IV-1) to (IV-4) and (C-I) to (C-II) may be used not only in a cyan ink but also in inks of any color including a black ink, a green ink and so on.

Oxidation potential The oxidation potential value (Eox) of the dye used in the invention can be easily determined by persons skilled in the art. The determination method thereof is described in documents such as: P. Delahay, "New Instrumental Methods in Electrochemistry", Interscience Publisher (1954); A.J. Bard et al., "Electrochemical Methods", John wiley & Sons (1980); and Akira Fujishima et al., "Denki Kagaku Sokuteiho (Measuring methods for electrochemistry)", Gihodo Shuppan Co., Ltd. (1984).
More specifically, the oxidation potential is determined by: dissolving a test sample into a solvent, such as dimethylformamide or acetonitrile containing a supporting electrolyte such as sodium perchlorate or tetrapropylammonium perchlorate, so that a concentration the test sample becomes 1×10⁻² to 1×10⁻⁶ mole/liter; putting the obtained solution in a cyclic voltammetry apparatus or a direct-current polarography apparatus having carbon (glassy carbon: GC) as a working electrode and a rotating platinum electrode as a counter electrode; carrying out sweeping toward the oxidation side (noble side) so as to observe an oxidation wave generated thereby; approximating the thus obtained oxidation wave by a straight line; and determining, as a value versus SCE (saturated calomel electrode), an midpoint potential value on a line segment formed between an intersection point of the straight line and a remaining current-potential line and an intersection point of the straight line and a saturated current line (or an intersection point of the straight line and a line parallel to the vertical axis passing through the peak potential value). Although this value may have a deviation of the order of several tens of millivolts under the influences of a liquid junction potential, solution resistance of a sample solution and so on, it is possible to ensure reproductivity of the potential by using a standard sample (e.g., hydroquinone). In addition, a supporting electrolyte and a solvent for use therein can be appropriately chosen according to oxidation potential and solubility of a test sample. Explanations regarding usable supporting electrolytes and solvents can be found in Akira Fujishima et al., "Denki Kagaku Sokuteiho (Measuring methods for electrochemistry)", Gihodo Shuppan Co., Ltd. (1984).

The amount of a coloring agent added to the ink composition is preferably from 1 to 20 % by mass, and is more preferably from 2 to 10 % by mass relative to a total amount of the composition in terms of a solid content.

Arbitrary components In the ink composition of the invention, various additives can be arbitrary used in addition to the essential components according to desired purposes. Such arbitrary components are described below.

Ultraviolet absorbing agent In the invention, an ultraviolet absorbing agent can be used from the viewpoints of improvement in weather resistance of images formed and prevention of discoloration.
Examples of the ultraviolet absorbing agent include the benzotriazole compounds described in JP-ANos. 58-185677, 61-190537, 2-782, 5-197075 or 9-34057, the benzophenone compounds described in JP-A Nos. 46-2784 or 5-194483 and U.S. Patent No. 3,214,463, the cinnamic acid compounds described in JP-B Nos. 48-30492, 56-21141 or JP-A No. 10-88106, the triazine compounds described in JP-A Nos. 4-298503, 8-53427, 8-239368, 10-182621 or PCT National Publication No. 8-501291, the compounds described in Research Disclosure, No. 24239, and compounds emitting fluorescence upon absorption of ultraviolet rays, which are typified by stilbene compounds, benzoxazole compounds and the like and known as fluorescent whitening agents.
The amount of the ultraviolet absorbing agent to be added to the composition of the invention is generally in a range of 0.5 to 15 % by mass relative to a total amount of the composition in terms of a solid content, while the amount can be appropriately selected according to the desired purpose,.

Sensitizer For the purposes of improving acid generation efficiency of the photo-acid generating agent and shifting sensitization wavelengths to the longer wavelength side, a sensitizer may be added to the ink composition of the invention when required. Any sensitizer may be added as long as it can sensitize the photo-acid generating agent through an electron transfer mechanism or an energy transfer mechanism. Preferable examples thereof include a condensed polycyclic aromatic ring compound such as anthracene, 9,10-dialkoxyanthracene, pyrene or perylene, an aromatic ketone compound such as acetophenone, benzophenone, thioxanthone or Michler's ketone, and a heterocyclic compound such as phenothiazine or an N-aryloxazolidinone. The amount of the sensitizer to be added is generally in a range of 0.01 to 1 mole %, and is preferably in a range of 0.1 to 0.5 mole %, based on the amount of photo-acid generating agents used in the composition of the invention, while it is appropriately selected according to the desired purpose.

Antioxidant In view of improving stability of the ink composition, an antioxidant can be added to the composition. Examples of the antioxidant include the compounds described in EP-A-223739, EP-A-309401, EP-A-309402, EP-A-310551, EP-A-310552, EP-A-459416, DE-A-3435443, JP-A Nos. 54-48535, 62-262047, 63-113536, 63-163351, 2-262654, 2-71262, 3-121449, 5-61166, 5-119449, or U.S. Patent Nos. 4,814,262 or 4,980,275.
The amount of the antioxidant added to the composition is generally in a range of 0.1 to 8 % by mass relative to the amount of the composition in terms of a solid content, while the amount can be appropriately selected according to the desired purpose.

Discoloration Inhibitor A discoloration inhibitor selected from various organic or metal-complex discoloration inhibitors can be used in the ink composition of the invention. Examples of the organic discoloration inhibitor include hydroquinones, alkoxyphenols, dialkoxyphenols, phenols, anilines, amines, indanes, chromans, alkoxyanilines and heterocyclic compounds. Examples of the metal-complex discoloration inhibitor include nickel complexes and zinc complexes. Specific examples thereof include the compounds described in the patent documents cited in Research Disclosure, No. 17643, items VII-I and VII-J, ibid., No. 15162, ibid., No. 18716, p. 650, left column, ibid., No. 36544, p. 527, ibid., No. 307105, p. 872, ibid., No. 15162; and compounds included in the general formula and examples of representative compounds described in JP-A No. 62-215272, pp. 127-137.
The amount of the discoloration inhibitor added to the composition is generally in a range of 0.1 to 8 % by mass relative to the amount of the composition in terms of a solid content, while the amount can be appropriately selected according to the desired purpose.

Conductive Salt For the purpose of controlling ejection properties of the ink composition of the invention, a conductive salt can be added to the composition. Examples of the conductive salt include potassium thiocyanate, lithium sulfate, ammonium thiocyanate and dimethylamine hydrochloride.

Solvent For the purpose of improving adhesion of the ink composition of the invention to a recording material, it is effective to add a trace amount of an organic solvent to the composition.
Examples of the solvent include a ketone solvent such as acetone, methyl ethyl ketone or diethyl ketone, an alcohol solvent such as methanol, ethanol, 2-propanol, 1-propanol, 1-butanol or tert-butanol, a chloride solvent such as chloroform or methylene chloride, an aromatic solvent such as benzene or toluene, an ester solvent such as ethyl acetate, butyl acetate or isopropyl acetate, an ether solvent such as diethyl ether, tetrahydrofuran or dioxane, and a glycol ether solvent such as ethylene glycol monomethyl ether or ethylene glycol dimethyl ether.
The addition of the organic solvent is effective as long as it is within the range that causes no problem such as solvent resistance or VOC, and the amount thereof is preferably from 0.1 to 5 % by mass, and is more preferably from 0.1 to 3 % by mass relative to the total amount of the composition.

Polymer compound A polymer compound selected from various kinds of polymer compounds can be added to the ink composition of the invention for controlling film properties of the composition. Examples of the polymer compound include an acrylic polymer, polyvinyl butyral resin, polyurethane resin, polyamide resin, polyester resin, epoxy resin, phenol resin, polycarbonate resin, polyvinyl formal resin, shellac, a vinyl resin, an acrylic resin, a rubber resin, wax, and natural resins. Any two or more of these polymer compounds may be used in combination. Among these polymer compounds, vinyl copolymers obtained by copolymerization of acrylic monomers are preferable. Preferable examples of the polymer compound further include a copolymer having a carboxyl group-containing monomer, an alkyl methacrylate, or an alkyl acrylate as a structural unit thereof.

Surfactant A surfactant may be added to the ink composition of the invention.
Examples of the surfactant which may be added to the composition include those described in JP-A Nos. 62-173463 or 62-183457. Specific examples of the surfactant include: anionic surfactants such as dialkyl sulfosuccinates, alkyl naphthalenesulfonates, or fatty acid salts; nonionic surfactants such as polyoxyethylne alkyl ethers, polyoxyethylene alkyl aryl ethers, acetylene glycols, or polyoxyethylene/polyoxypropylene block copolymers; and cationic surfactants such as alkylamine salts or quaternary ammonium salts. An organic fluorinated compound may be used in place of the surfactant. The organic fluorinated compounds is preferably hydrophobic. Examples of the fluorinated organic compound include fluorochemical surfactants, fluorinated compounds in an oily state (e.g., fluorinated oil) and fluorinated compound resins in a solid state (e.g., tetrafluoroethylene resin), and specific examples thereof include those described in JP-B No. 57-9053 (columns 8 to 17) or JP-A No. 62-135826.

In addition to these ingredients, if needed, the ink composition of the invention may further include other ingredients such as a leveling additive, a matting agent, a wax for controlling film properties or a tackifier for improving adhesion of the composition to a recording material such as polyolefin or PET.
The tackifier does not inhibit polymerization caused in the composition. Specific examples of the tackifier include the high-molecular-weight sticky polymers described in JP-A No. 2001-49200, pp. 5-6, such as copolymers produced from esters of (meth)acrylic acid and alcohol compounds containing alkyl groups having 1 to 20 carbon atoms, esters of (meth)acrylic acid and alicyclic alcohol compounds having 3 to 14 carbon atoms and esters of (meth)acrylic acid and aromatic alcohol compounds having 6 to 14 carbon atoms, and low-molecular-weight resins having polymerizable unsaturated bonds and imparting tackiness.

In view of ejection properties, the viscosity of the ink composition of the invention is preferably in a range of 7 to 30 mPa·s, and is more preferably in a range of 7 to 20 mPa·s at the temperature when the ink is ejected. It is preferable that the proportions of ingredients of the composition are properly determined so that the viscosity of the ink composition is adjusted to be within the above-specified range. The viscosity of the ink composition at a temperature ranging from 25°C to 30°C is typically from 35 to 500 mPa·s, and is preferably from 35 to 200 mPa·s. Adjusting of the viscosity of the ink composition at room temperature to be a high value enables prevention of permeation of the ink into a recording material, reduction in the amount of uncured monomer molecules, reduction of odor even when the recording material is porous, and suppression of blurring of a dot formed upon impact of ink droplets ejected onto the recording material. As a result thereof, image quality can be improved. The viscosity of the ink composition lower than 35 mPa·s at temperatures of 25° to 30°C may provide little effect on the suppression of blurring of a dot, while the viscosity of the ink composition higher than 500 mPa·s may cause a problem with delivery of ink liquid.

The surface tension of the ink composition of the invention is preferably in a range of 20 to 30 mN/m, and is more preferably in a range of 23 to 28 mN/m. In the case when recording on various recording materials such as polyolefin film, PET film, coated paper or uncoated paper is performed by using the composition, the surface tension is preferably 20 mN/m or more from the viewpoint of ink spread and permeation, and it is preferably 30 mN/m or less from the viewpoint of wettability.

The ink composition of the invention thus prepared can be used as a preferable ink composition for inkjet recording. When the ink composition is used as an inkjet recording ink, the ink is ejected onto a recording material by means of an inkjet printer, and then the ejected composition (ink) is cured by being exposed to radiation so as to perform recording.
The print obtained using the ink has an image area cured by being exposed to radiation such as ultraviolet rays. The strength of the image area is high. Therefore, the ink can be applied to various uses such as a formation of an ink-receiving layer (an image area) of a planographic printing plate as well as an ink image formation.

Inkjet recording method and Inkjet recording apparatus The present inkjet recording method includes at least ejecting the ink composition of the present invention onto a recording material by using an inkjet recording apparatus such as an inkjet recording printer and irradiating the ejected ink composition with radiation so as to cure the ink composition.

In the inkjet recording method, it is preferable that the ink composition is heated to be in a range of 40° to 80°C so as to decrease the viscosity of the ink composition to be in a range of 7 to 30 mPa·s and then ejected. High ejection stability can be achieved by adopting such a method. Since a radiation cured ink composition generally has higher viscosity than a water-based ink, a variance of its viscosity due to variations in temperature during printing becomes greater. Such a viscosity variance of the ink composition directly has great influence on the size and ejecting speed of liquid-drops, and causes deterioration in image quality. Therefore, the ink composition temperature during the printing is required to be kept as constant as possible. The ink composition temperature is controlled preferably to within a set temperature ± 5°C, more preferably to a set temperature ± 2°C, and particularly preferably to a set temperature ± 1 °C.

One characteristic of the inkjet recording apparatus is to have a unit for stabilizing the temperature of the ink composition, which is to maintain a constant temperature for all piping systems and members installed in the range from an ink tank (or an intermediate tank when provided) to the ejection surface of the nozzles.

While there is no particular restriction to the method for controlling the temperature of an inkjet recording apparatus, examples of the controlling method include a method placing plural temperature sensors on each piping part and regulating the temperature by heating in accordance with the flow rate (quantity of flow) of an ink composition and ambient temperature. The head unit to be heated is preferably blocked or insulated from outside heat so that the unit body is unaffected by the temperature of outside air. In view of reducing a startup time required for a printer to be heated or reducing thermal energy loss, it is preferable that the head unit is thermally insulated from other sections, as well as having a small thermal capacity of the heating unit as a whole.

Next, the conditions for irradiation will be described. The basic irradiation method is disclosed in JP-A No. 60-132767. Specifically, a light source is installed on either side of a head unit, and the head and the light sources are made to scan in accordance with a shuttle system. After impact of ink droplets, irradiation is carried out a fixed time interval later. The curing is completed by further irradiation with another light source with no accompanying drive. WO 99/54415 discloses a method of using optical fibers and a method of shining a collimated light source on the surface of a mirror mounted on the side of a head unit and irradiating the recording areas with UV light. In the present invention, these irradiation methods can also be used.

In the invention, it is appropriate that the ink composition be heated to a given temperature and the interval between impact and irradiation be controlled to fall within the range of 0.01 to 0.5 seconds. Exposure to radiation after 0.01 to 0.3 seconds is preferable, and that after 0.01 to 0.15 second is more preferable. The control of an interval between impact and irradiation to a very short time makes it possible to prevent the ink having impacted on a recording material from spreading before being cured. In addition, such control also allows irradiation to start before permeation of the ink composition into the radiation-inaccessible depth of a recording material even when the recording material is porous, so that incidence of unreacted monomer residues is lowered, resulting in reduction of odor. The combined use of the inkjet recording method mentioned above and the ink composition of the invention can produce a great synergistic effect. This can be achieved specifically when using the ink composition having an viscosity of the ink composition at 25°C in the range of 35 to 500 MP·s. By adopting such a recording method, consistent dot size of ink that has impacted can be ensured on various recording materials differing in surface wettability, and thus the image quality can be improved. Additionally, superimposing colors in order of increasing lightness is preferable for formation of color images. When ink of low lightness is superimposed, it is difficult for the irradiation light to reach the ink situated therebeneath; as a result, the curing sensitivity tends to be impaired, monomer residues increase in quantity, odor is emitted and the adhesiveness deteriorates. In terms of cure acceleration, color-by-color irradiation is preferred, though it is also possible that all of colors ejected are exposed to light at once.

The inkjet recording apparatus used in the invention has no particular restrictions, and it may be a commercially available inkjet recording apparatus. In other words, the recording on a recording material by use of a commercially available inkjet apparatus can be performed in the invention.

Recording material A recording material to which the ink composition of the invention is applicable has no particular restrictions. Examples of the recording material include commonly-used paper such as uncoated paper or coated paper, various kinds of nonabsorbent resin materials used for the so-called soft wrapping, and resin films obtained by forming such materials into the shape of film. Specific examples of the various plastic films include PET film, OPS film, OPP film, ONy film, PVC film, PE film, and TAC film. Specific examples of other plastics usable as recording materials include polycarbonate, acrylic resin, ABS, polyvinyl acetal, PVA, and rubbers. In addition, metal and glass are also usable as recording materials.
The ink composition of the invention exhibits little thermal shrinkage at the time of curing and has high adhesion to a base material (recording material). Accordingly, the ink composition of the invention has an advantage in its capability to form high-definition images on films such as thermally shrinkable PET, OPS, OPP, ONy or PVC film which tend to curl and deform by curing shrinkage of ink and heat generated by curing reaction.

Planographic printing plate One preferable example of the application of the ink composition of the invention is the utilization of the ink composition for forming a planographic printing plate.
A hydrophobic ink-receiving region can be formed in an imagewise pattern on a hydrophilic substrate surface of a hydrophilic substrate by ejecting, by using inkjet recording apparatus or the like, the ink composition onto the hydrophilic substrate and then irradiating the ejected ink composition so as to cure the ink composition. When a printing ink for and an aqueous ingredient are supplied to the thus processed substrate surface, the aqueous ingredient is held on bare regions (hydrophilic regions having no cured ink composition) of the hydrophilic substrate, while the printing ink is held on the hydrophobic ink-receiving regions. Accordingly, the resulting substrate can be subjected to printing operations as it is.
The ink composition of the invention shows excellent curability upon exposure to radiation. Therefore, the planographic printing plate formed by utilizing the ink composition of the invention can have an image area having excellent durability. In addition, the use of an inkjet recording apparatus for formation of an image area allows forming a planographic printing plate having a high-definition image area directly from digital data.
The ink composition of the invention can be applied as an ink composition for the making of a planographic printing plate as it is.

Substrate The substrate used in preparing the planographic printing plate of the invention has no particular restriction so long as it is a dimensionally stable plate-shape substrate. The substrate forming material may be used as it is when it has a hydrophilic surface. Alternatively, the surface of the plate-shaped material of the substrate may be subjected to hydrophilization treatment before the substrate is used for the preparation of the planographic printing plate.
Examples of the material usable for forming the substrate used in the invention include paper, paper laminated with plastic (such as polyethylene, polypropylene or polystyrene), a plate formed of metal (such as aluminum, zinc or copper), a film of plastic (such as cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate or polyvinyl acetal), and paper or plastic films on which the above-recited metal is laminated or evaporated. Preferable examples of the substrate include a polyester film and an aluminum plate. Among these, an aluminum plate is especially preferable in terms of superiority in dimensional stability and relatively inexpensive price.

Examples of the aluminum plate include a pure aluminum plate, an alloy plate having aluminum as a main component and trace amounts of foreign elements, and a thin film of pure aluminum or aluminum alloy onto which plastic is laminated. Examples of the foreign elements contained in the aluminum alloy include silicon, iron, manganese, copper, magnesium, chromium, zinc, bismuth, nickel and titanium. The amount of the foreign elements in the aluminum alloy is preferably 10 % by mass or less relative to the total amount of the aluminum alloy. While pure aluminum is preferable in the invention, aluminum containing foreign elements in small amounts may be used in consideration of the technological difficulty in refining to produce an absolutely pure aluminum. The composition of the aluminum plate is not particularly restricted, and any conventionally-known materials can be appropriately utilized.
The thickness of the substrate is preferably in a range of 0.1 to 0.6 mm, and is more preferably in a range of 0.15 to 0.4 mm.

When such an aluminum plate is used as the substrate of the planographic printing plate, the aluminum plate is preferably subjected to surface treatment, such as surface-roughening treatment or anodic oxidation treatment, before being provided with the composition of the invention. The surface treatment enables easily improving the hydrophilic property of the aluminum plate surface and ensuring sufficient adhesion between the aluminum plate surface and an image-recording layer of the planographic printing plate. Before the surface-roughening treatment, if needed, the aluminum plate can be subjected to degreasing treatment by using a surfactant, an organic solvent, an alkaline aqueous solution or the like for removing a rolling oil from the aluminum plate surface.

The roughening treatment of an aluminum plate surface can be carried out using any of various methods such as a mechanical surface-roughening treatment, an electrochemical surface-roughening treatment (a treatment of roughening an aluminum plate surface through electrochemical dissolution), and a chemical surface-roughening treatment (a treatment of roughening the surface through selective dissolution by chemical action).
Examples of the mechanical surface-roughening method include known methods such as a ball graining method, a brush graining method, a blast graining method or a buff graining method. Alternatively, it is acceptable to adopt a transfer method of using a roll having an uneven surface profile and transferring its unevenness to an aluminum plate surface at a rolling stage of aluminum during formation of the aluminum plate.
Examples of the electrochemical surface-roughening method include a method of roughening the surface of an aluminum plate in an electrolytic solution containing an acid such as hydrochloric acid or nitric acid by using alternating current or direct current through the electrolytic solution. Examples of the method further include a method using a mixed acid as described in JP-A No. 54-63902.

The thus surface-roughened aluminum plate can be subjected to alkali etching treatment with an aqueous solution such as that of potassium hydroxide or sodium hydroxide and further to neutralizing treatment, if needed. The surface-roughened aluminum plate can be further subjected to anodic oxidation treatment for enhancing abrasion resistance, if desired.

Examples of an electrolyte used for the anodic oxidation treatment of the aluminum plate include various electrolytes capable of forming porous oxide coating. In general, sulfuric acid, hydrochloric acid, oxalic acid, chromic acid, and mixed acids of two or more thereof can be used as such electrolytes. The concentration of electrolyte can be appropriately determined according to the kind of the electrolyte used.
While condition for anodic oxidation treatment cannot be comprehensively specified as it varies according to the electrolyte used, it is generally preferable that the electrolyte concentration in an electrolytic solution is in a range from 1 to 80 % by mass, the solution temperature is in a range from 5 to 70°C, the current density is in a range from 5 to 60 amperes/dm², the voltage is in a range from 1 to 100 V, and the electrolysis time is in a range from 10 sec. to 5 min. The quantity of an anodic oxide coating formed is preferably in a range from 1.0 to 5.0 g/m², and is more preferably in a range from 1.5 to 4.0 g/m². When the conditions are controlled to be within the above ranges, an excellent printing durability of the planographic prining plate and an excellent scratch resistance in non-image areas of the planographic printing plate can be obtained.

The substrate that has been subjected to the surface treatments and further provided with an anodic oxide coating may be used in the invention as it is. Alternatively, in view of further improvements in adhesion to an upper layer, hydrophilicity, scumming resistance and thermal insulation, the substrate can be further subjected to treatment which is appropriately selected from enlarging of micropores of the anodic oxide coating, sealing of micropores of the anodic oxide coating, imparting of hydrophilicity to the surface by immersion into an aqueous solution of hydrophilic compound and the like such as described in JP-A Nos. 2001-253181 or 2001-322365. The additional treatments such as the enlarging treatments and the sealing treatments are not limited to those described in the documents cited above, and any of known methods can be applied to the present invention.

Sealing treatment Examples of the sealing treatment which can achieve the foregoing purposes include a steam sealing, a treatment with fluorozirconic acid alone, a sealing treatment with an aqueous solution containing an inorganic fluorine compound such as sodium fluoride, a vapor sealing treatment with lithium chloride-added steam, and a sealing treatment with hot water.
Among these sealing treatments, the sealing with an aqueous solution containing an inorganic fluorine compound, the steam sealing and the hot water sealing are particularly preferable.

Hydrophilization Examples of the hydrophilizing treatment usable in the invention include the alkali metal silicate method such as that described in each of U.S. Patent Nos. 2,714,066, 3,181,461, 3,280,734 and 3,902,734. In this method, a substrate is subjected to immersion or electrolytic treatment in an aqueous solution of sodium silicate or the like. Examples of the hydrophilizing treatment further include the method of treating with potassium fluorozirconate described in JP-B-36-22063 and the method of treating with polyvinylphosphonic acid described in each of U.S. Patent Nos. 3,276,868, 4,153,461 and 4,689,272.

It is preferable that a center-line average roughness of the substrate utilized in the planographic printing plate of the invention is in a range of 0.10 to 1.2 µm. When the center-line average roughness is within the range, the substrate can be brought into intimate contact with an image-recording layer (image areas) and the planographic printing plate can ensure a sufficient durability and satisfactory scumming resistance.

### EXAMPLES

While the invention is described in more detail by reference to the following examples, the embodiments in these examples should not be construed as limiting the scope of the invention.

Example 1
Preparation of Pigment dispersion
Yellow pigment dispersion 1, magenta pigment dispersion 1, cyan pigment dispersion 1 and black pigment dispersion 1, each of which has the following respective formulation, were prepared. Each pigment was dispersed by use of a known dispersing apparatus under dispersing conditions properly adjusted so that the average size of the pigment particles fell within the range of 0.2 to 0.3 µm, and then the dispersion thus obtained was filtered under heating, thereby preparing the intended dispersion.

| Yellow Pigment Dispersion 1 | |
|---|---|
| C.I. Pigment Yellow 12 | 10 parts by mass |
| Polymeric dispersing agent (SOLSPERSE^{®} Series: manufactured by Zeneca) | 5 parts by mass |
| 3-ethyl-3-oxetane methanol | 85 parts by mass |

| Magenta Pigment Dispersion 1 | |
|---|---|
| C.I. Pigment Red 57:1 | 15 parts by mass |
| Polymeric dispersing agent (SOLSPERSE^{®} Series: manufactured by Zeneca) | 5 parts by mass |
| 3-ethyl-3-oxetane methanol | 80 parts by mass |

| Cyan Pigment Dispersion 1 | |
|---|---|
| C.I. Pigment Blue 15:3 | 20 parts by mass |
| Polymeric dispersing agent (SOLSPERSE^{®} Series: manufactured by Zeneca) | 5 parts by mass |
| 3-ethyl-3-oxetane methanol | 75 parts by mass |

| Black Pigment Dispersion 1 | |
|---|---|
| C.I. Pigment Black 7 | 20 parts by mass |
| Polymeric dispersing agent (SOLSPERSE^{®} Series: manufactured by Zeneca) | 5 parts by mass |
| 3-ethyl-3-oxetane methanol | 75 parts by mass |

### Preparation of Ink composition

An ink composition of each color was prepared by mixing the following ingredients and then passing the mixture through a filter.
Yellow ink composition 1

| | | |
|---|---|---|
| - (A) | Specific onium compound component | |
| | (Exemplary compound (A-1)): | 0.5 g |
| - (B) | Photo-acid generating agent: | |
| | (Exemplary compound (b-27)/ Exemplary compound (b-32)=1/2) | 5 g |
| - (C) | Cationic polymerizable compound: | |
| | Epoxy compound (trade name: CELOXIDE 2021, manufactured by Daicel UCB Co., Ltd.) | 35 g |
| | Oxetane compound (trade name: OXT-221, manufactured by TOAGOSEI Co., Ltd.) | 55 g |
| - (D) | Coloring agent (pigment dispersion): | |
| | Yellow pigment dispersion 1 | 5 g |

Magenta ink composition 1

| | | |
|---|---|---|
| - (A) | Specific onium compound component | |
| | (Exemplary compound (A-1)): | 0.3 g |
| - (B) | Photo-acid generating agent: | |
| | (Exemplary compound (b-3)) | 5 g |
| - (C) | Cationic polymerizable compound: | |
| | Epoxy compound (trade name: CELOXIDE 2021, manufactured by Daicel UCB Co., Ltd.) | 35 g |
| | Oxetane compound (trade name: OXT-221, manufactured by TOAGOSEI Co., Ltd.) | 55 g |
| - (D) | Coloring agent (pigment dispersion): | |
| | Magenta pigment dispersion 1 | 5 g |

Cyan ink composition 1

| | | |
|---|---|---|
| - (A) | Specific onium compound component | |
| | (Exemplary compound (A-1)): | 0.03 g |
| - (B) | Photo-acid generating agent: | |
| | (Exemplary compound (b-75)) | 5 g |
| - (C) | Cationic polymerizable compound: | |
| | Epoxy compound (trade name: CELOXIDE 2021, manufactured by Daicel UCB Co., Ltd.) | 35 g |
| | Oxetane compound (trade name: OXT-221, manufactured by TOAGOSEI Co., Ltd.) | 55 g |
| - (D) | Coloring agent (pigment dispersion): | |
| | Cyan pigment dispersion 1 | 5 g |

Black ink composition 1

| | | |
|---|---|---|
| - (A) | Specific onium compound component | |
| | (Exemplary compound (A-1)): | 0.3 g |
| - (B) | Photo-acid generating agent: | |
| | (Exemplary compound (b-10)) | 5 g |
| - (C) | Cationic polymerizable compound: | |
| | Epoxy compound (trade name: CELOXIDE 2021, manufactured by Daicel UCB Co., Ltd.) | 35 g |
| | Oxetane compound (trade name: OXT-221, manufactured by TOAGOSEI Co., Ltd.) | 55 g |
| - (D) | Coloring agent (pigment dispersion): | |
| | Black pigment dispersion 1 | 5 g |
| - Sensitizer: 9,10-dimethoxyanthracene | | 0.5 g |

Evaluation of Multicolored image formed by inkjet image recording
Recording on a recording material was performed using a commercially available inkjet recording apparatus equipped with piezo-type inkjet nozzles. The ink feeding system of the apparatus included source tanks, feed piping, ink feed tanks installed immediately in front of a piezo-type inkjet head, filters and the piezo-type inkjet head. Heating and insulation were given to the section extending from the ink feed tanks to the inkjet head. The temperature sensors were put in the ink feed tanks and in the vicinity of nozzles of the inkjet head, respectively, and the temperature in the nozzle region was controlled so as to be within a range of 70°C ± 2°C. The piezo-type inkjet head was driven so that multiple-size dots of 8 to 30 pl can be ejected in 720x720 dpi resolution. The exposure system, the main scan speed and the ejection frequencies were adjusted so that UV-A light was condensed so as to have illuminance of 100 mW/cm² at the exposed surface and the irradiation was started after 0.1 second after the impact of ink droplets onto the recording material. In addition, the exposure time was made to be variable, and application of exposure light energy was carried out. Incidentally, the term "dpi" herein used refers to the number of dots per 2.54 cm.

The black ink composition, the cyan ink composition, the magenta ink composition and the yellow ink composition prepared in the foregoing manners were sequentially ejected in this order at ambient temperature of 25°C, while irradiation with UV light was performed when ejection of each of the ink compositions was ejected. The irradiation of the UV was carried out so that the total exposure energy per color becomes 300 mJ/cm², which is enough to completely cure the ink composition of each color so that tackiness is not observed by touch with fingers. The recording materials used herein were an aluminum substrate grained with sand, a transparent biaxially-stretched polypropylene film having subjected to a surface treatment so as to have printing suitability, a soft sheet of vinyl chloride, a cast-coated paper sheet and a commercially available recycled paper. When images of each color were recorded on each of these recording materials, high-resolution images which are free of blurring of dots were obtained. Even in the case when wood free paper was used, each ink composition was cured to a sufficient degree and was free from a strike-through phenomenon, and besides, almost no odor due to unreacted monomers was traceable. Further, the ink composition recorded on the film had sufficient flexibility. No crack was generated on the ink composition recorded on the film (ink composition cured on the film) even when the film was bent. There was no problem in the ink composition recorded on the film when it was subjected to an adhesion test using peeling of a cellophane tape.

Examples 2 to 10 and Comparative examples 1 To 4 Preparation of Ink composition
Magenta ink compositions 2-1 to 2-10 were prepared by mixing the following ingredients and passing each of the resulted mixtures through a filter. In addition, an ink composition of Comparative Example 1 (magenta ink composition 2-10) was prepared in the same manner as the ink composition of Example 10, except that the (A) specific onium compound component (the specific onium salt (A)) was not incorporated therein. Further, an ink composition of Comparative Example 2 (magenta ink composition 2-11) was prepared in the same manner as the ink composition of Example 10, except that the (A) specific onium compound component (the specific onium salt (A)) was replaced with the same amount of the following comparative compound 1. Further, an ink composition of Comparative Example 3 (magenta ink composition 2-12) was prepared in the same manner as the ink composition of Example 10, except that the (A) specific onium compound component (the specific onium salt (A)) was replaced with the same amount of the following comparative compound 2. Furthermore, an ink composition of Comparative Example 4 (magenta ink composition 2-13) was prepared in the same manner as the ink composition of Example 10, except that the (A) specific onium compound component (the specific onium salt (A)) was replaced with the same amount of the following comparative compound 3.

Magenta Ink Compositions 2-1 to 2-13

| | | |
|---|---|---|
| - (A) | Specific onium compound component or Comparative compound (Compound shown in Table 1) | 0.03 g |
| - (B) | Photo-acid generating agent (Compound shown in Table 1 or 2) | 5 g |
| - (C) | Cationic polymerizable compound | |
| | (Compound shown in Table 1) | 90 g |
| - (D) | Coloring agent (Magenta Pigment Dispersion 1) | 5 g |
| - Sensitizer: 9,10-dimethoxyanthracene | | 0.5 g |

Details of the cationic polymerizable compounds shown in Table 1 are as follows. Cationic polymerizable compound (1):
Mixture of epoxy compound (CELOXIDE 2021, produced by Daicel UCB Co.,Ltd.) and oxetane compound (Trade name: OXT-221, manufactured by TOAGOSEI Co., Ltd.) in the mass ratio of 35:55
Cationic polymerizable compound (2):
Mixture of epoxy compound (CELOXIDE 2021, produced by Daicel UCB Co.,Ltd.) and oxetane compound (Trade name: OXT-221, manufactured by TOAGOSEI Co., Ltd.) in the mass ratio of 50:40
Cationic polymerizable compound (3):
Mixture of bisphenol A diglycidyl ether and oxetane compound (Trade name: OXT-221, manufactured by TOAGOSEI Co., Ltd.) in the mass ratio of 40:50

Comparative compound 1 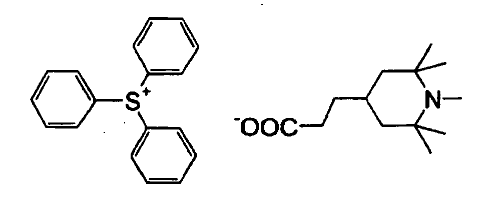 Comparative compound 2

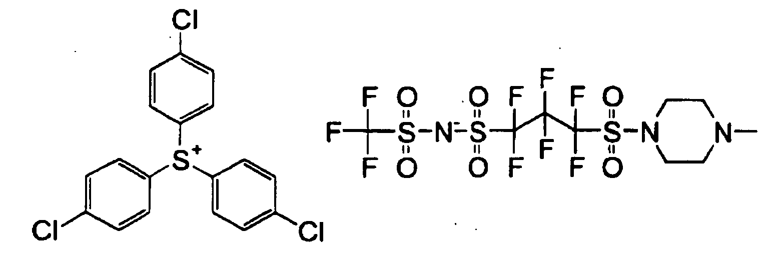

The ink compositions prepared in Examples and Comparative examples had viscosity being within a range of 7 to 20 mPa·s at the temperature when the ink composition were ejected.

Evaluation of Monochromatic image formed by inkjet image recording In the same manner as in Example 1, magenta images were printed with each of the thus prepared magenta ink compositions prepared in Examples 2 to 10 and Comparative examples 1 to 4.

Evaluations of Inkjet image The images printed with each of the magenta ink compositions were evaluated in terms of sensitivity to exposure required for curing, storage stability, ejection stability, permeability into commercially available recycled paper, ink blurring on a grained aluminum substrate, and adhesion to a grained aluminum substrate in accordance with each of the following methods.

1. Measurement of Sensitivity to exposure required for curing The amount of exposure energy (mJ/cm²) required for disappearance of tackiness of a surface of each image by UV irradiation was defined as the sensitivity required for curing. The smaller energy value, the higher sensitivity to exposure required for curing the ink composition has.

2. Evaluation of Storage stability After each ink composition was stored for 3 days under the condition of 75%RH-60°C, the viscosity of the ink composition at the temperature at which the ink composition is used for ejecting was measured. The increase in the viscosity of the ink composition was expressed in terms of the ratio (a/b) of (A) the viscosity of the ink composition after storage to (B) the viscosity of the ink composition before storage. The nearer the ratio is to 1.0 as a result of smaller change in viscosity, the better the storage stability of the ink composition is. When the ratio goes up to over 1.5, undesirable clogging may occur at the time of ejection of the ink composition.

3. Evaluation of Ejection stability under continuous ejection condition The ejection stability of the ink composition under the condition in which the ink composition is applied to inkjet recording using head nozzles subjected to light reflected from a substrate was evaluated by counting the number of nozzle losses (namely, the number of nozzles which caused clogging) observed when a printing operation is continuously performed for 60 minutes with a commercially available ink jet recording apparatus having piezo-type ink jet nozzles under the following running condition. The evaluation was performed by counting the nozzle losses occurred under the condition where (i) the ink composition ejected onto a PET substrate is exposed with an exposure amount of 1,000 mW/cm² as well as under the condition where (ii) no exposure of the ink composition ejected onto a PET substrate is conducted (namely, ejection of the ink composition was solely performed). In Table 1, the number counted under the condition (i) is shown without parenthesis, and the number counted under the condition (ii) is shown in parentheses.
Running condition of the inkjet recording apparatus:
- Number of Channels: 318 (per head)
- Number of Driving frequency: 4.8 kHz/dot
- Volume of Ink droplet: 7 droplets (42 pl)
- Temperature of Nozzles: 45°C

4. Evaluation of Permeability into commercially available recycled paper The permeability of the ink composition was evaluated by examining the images printed on commercially available recycled paper in accordance with the following criteria.
A: Permeation is negligible and there is no smell of residual monomers.
B: Slight permeation of the ink composition and a faint smell of residual monomers are perceived.
X: Obviously the ink composition permeates through paper and there is a remarkable odor of residual monomers.

5. Evaluation of Blurring of ink composition on grained aluminum substrate The blurring of the ink composition was evaluated by examining the images printed on a grained aluminum substrate in accordance with the following criteria.
A: No blurring of the ink composition is observed between adjacent dots.
B: Slight dot blurring are observed.
X: Dots are spread and images are obviously blurred.

6. Evaluation of Adhesion to grained aluminum substrate The adhesion property of the ink image printed on the grained aluminum substrate was evaluated as follows. Namely, one sample having no scratch on its printed surface and another sample having 100 sections of 1-mm square made in a grid pattern by cutting the sample with 11 vertical lines and 11 horizontal lines on its printed surface in accordance with a conventionally-known testing method of coating materials (the cross-cut adhesion test) were prepared for each of the ink images. A cellophane tape was affixed onto a surface of each of the samples and quickly peeled off at an angle of 90°. After this action, the appearance of printed images or sections remaining unpeeled was evaluated according to the following criteria.
A: No exfoliation of the printed image is observed even in the cross-cut adhesion test.
B: While a few flakes of ink compositions are observed in the cross-cut adhesion test, almost no exfoliation is observed as long as the surface of the sample has no scratch.
X: The printed image is easily peeled away with a cellophane tape in both of the test conditions.

Evaluation of Ink composition for Planographic printing plate application Images are formed on the grained aluminum substrate by printing with each of the ink compositions prepared in Examples and Comparative Examples. Each of the resultants is used as a planographic printing plate, and evaluations thereof in terms of the image-quality and the printing durability are performed as follows.

Evaluation of Image-quality Each of the planographic printing plates made with each of the ink compositions prepared in Examples and Comparative Examples was mounted in a printer (trade name: HEIDEL KOR-D, manufactured by Heidelberg Co.) and printing onto paper sheets was performed therewith while feeding thereto a printing ink (trade name: SHEET-SPECIFIC VALUES-G CRIMSON, manufactured by Dainippon Ink & Chemicals, Inc.) and a fountain solution (trade name: ECOLITY 2, manufactured by FUJIFILM Corporation). The print obtained when the printing onto the 100th sheet was finished was evaluated by visual observation in accordance with the following criteria.
A: The print having neither image deletion in the image area nor stain in the non-image area is obtained.
B: Slight image deletion is observed in the image area and/or slight stain is observed in the non-image area.
X: Image deletion in the image area and/or a slight stain in the non-image area, which is at a level where concerns rise in practical applications, is observed.

Evaluation of Printing durability The printing was continued, and the number of sheets printed with no image deletion in the image area and no stain in the non-image area was adopted as the index of the printing durability. The printing durability is shown as a relative value with the number of such sheets obtained at Example 1 being taken as 100. The greater the number is, the higher the printing durability of the planographic printing plate is.
The results of the evaluations are shown in the following Table 1.

**Table 1**

| | Ink Composition | | | | Evaluation | | | | | | | |
|---|---|---|---|---|---|---|---|---|---|---|---|---|
| | (A) Specific onium salt | (B) Photo-acid generating agent | (C) Cationic polymerizable compound | Comp. compound (base component) | Permeability into Recycled Paper | Blurring on Aluminum Substrate | Adhesion to Aluminum Substrate | Sensitivity for Curing (mJ/cm²) | Ink Storage Stability | Nozzle loss | Image Quality | Printing durability |
| Example 2 | A-1 | b-3 | (1) | (None) | A | A | A | 100 | 1.1 | 2 (2) | A | 120 |
| Example 3 | A-2 | b-5 | (1) | (None) | A | A | A | 100 | 1.1 | 2 (2) | A | 110 |
| Example 4 | A-3 | b-29 | (1) | (None) | A | A | A | 100 | 1.1 | 2 (2) | A | 120 |
| Example 5 | A-4 | b-40 | (1) | (None) | A | A | A | 100 | 1.1 | 2 (2) | A | 110 |
| Example 6 | A-7 | b-59 | (2) | (None) | A | A | A | 100 | 1.1 | 2 (2) | A | 120 |
| Example 7 | A-9 | b-74 | (2) | (None) | A | A | A | 110 | 1.2 | 2 (2) | A | 120 |
| Example 8 | A-10 | b-12 | (2) | (None) | A | A | A | 100 | 1.1 | 2 (2) | A | 110 |
| Example 9 | A-11 | b-24 | (2) | (None) | A | A | A | 100 | 1.2 | 2 (2) | A | 120 |
| Example 10 | A-12 | b-80 | (3) | (None) | A | A | A | 110 | 1.2 | 2 (3) | A | 110 |
| Example 11 | A-15 | b-82 | (3) | (None) | A | A | A | 110 | 1.1 | 2 (2) | A | 120 |
| Example 12 | A-17 | b-39 | (3) | (None) | A | A | A | 100 | 1.2 | 2 (2) | A | 110 |
| Example 13 | A-20 | b-3 | (3) | (None) | A | A | A | 100 | 1.2 | 2 (2) | A | 120 |
| Comparative example 1 | (None) | b-3 | (4) | (None) | A | A | A | 100 | 1.8 | 2 (12) | A | 100 |
| Comparative example 2 | (None) | b-3 | (4) | Comp. Compound 1 | A | A | A | 200 | 1.3 | 2 (7) | A | 90 |
| Comparative example 3 | (None) | b-3 | (4) | Comp. Compound 2 | A | A | A | 150 | 1.2 | 2 (8) | A | 100 |
| Comparative example 4 | (None) | b-3 | (4) | Comp. Compound 3 | A | A | A | 280 | 1.4 | 2 (6) | A | 90 |

As can be seen from Table 1, the ink composition prepared in each of the Examples was excellent in both of the high sensitivity curing upon exposure to radiation and storage stability, as well as was excellent in the adhesion property of obtained ink images, the quality of image applied for forming planographic printing plates, and the printing durability of planographic printing plates formed therefrom.
On the other hand, the ink composition prepared in Comparative Example 1, which was free of a base component, revealed poor storage stability. Further, it has been shown that all of the ink composition prepared in Comparative example 2, in which the comparative compound 1 having highly nucleophilic acid group was used in place of the specific onium salt (A), the ink composition prepared in Comparative example 3, in which the comparative compound 2 having a highly nucleophilic nitrogen atom in an amine structure was used in place of the specific onium salt (A), and the ink composition prepared in Comparative example 4, in which a generally-known base compound dimethyl dodecylamine was used in place of the specific onium salt (A), exhibited insufficient sensitivity curing upon exposure to radiation, even though each of these comparative example has a decomposable onium salt structure as a base component.

The ink composition of the invention not only enables formation of images of high quality and high strength when applied to commonly-used printing methods and providing high-grade printed materials, but also can be used suitably for manufacturing resist, color filters and optical recording disks. In addition, the ink composition of the invention can be also useful as a photo-sculpturing material.

## Claims

1. An ink composition comprising: an onium salt compound (A) having an anionic portion (i) comprising an acid group having low nucleophilicity and a hindered amine structure and a cationic portion (ii) which is photo-decomposable; a cationic polymerization initiator (B) responsive to radiation; a cationic polymerizable compound (C); and a coloring agent (D).

2. The ink composition of claim 1, wherein the acid group having low nucleophilicity in the onium salt compound (A) is an acid group having a formal charge on a nitrogen atom or a carbon atom.

3. The ink composition of claim 1, wherein the onium salt compound (A) is a compound represented by any one of the following Formulae (a) to (e): 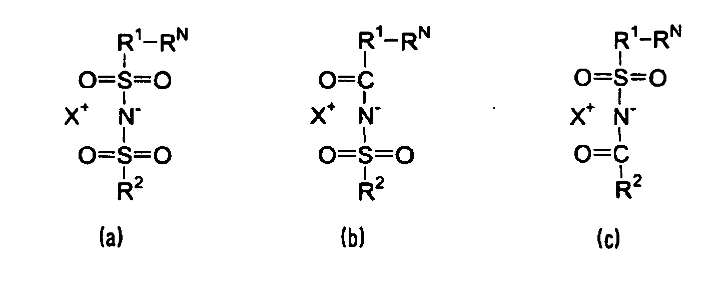 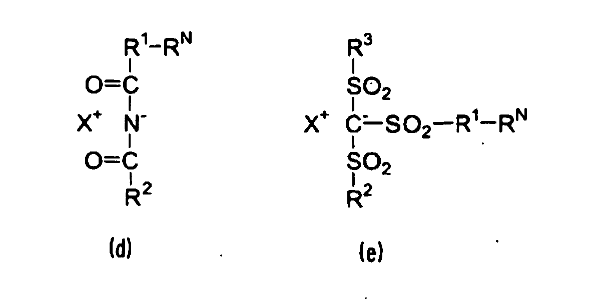 wherein, in Formulae (a) to (e), X represents a degradable sulfonium or a degradable iodonium; R¹ represents an alkylene group, an arylene group, an aralkylene group, a perfluoroalkylene group, a perfluoroarylene group, a perfluoroaralkylene group, a cycloalkylene group, or a perfluoro cycloalkylene group; R² and R³ each independently represents an alkyl group, an aryl group, an aralkyl group, a perfluoroalkyl group, a perfluoroaryl group, a perfluoroaralkyl group, a cycloalkyl group, or a perfluoro cycloalkyl group; the group represented by R² and the group represented by R³ may be bonded with each other to form a cyclic structure; a portion of the group represented by R¹ and the group represented by either of R² and R³ may be bonded with each other to form a cyclic structure; and R^{N} represents an amine structure.

4. The ink composition of any one of claims 1 to 3, wherein the amount of the onium salt compound (A) is in the range of 0.01 to 15 % by mass relative to the total amount of the ink composition in terms of solid content, and the ink composition is used in ink jet recording.

5. A method for ink jet recording comprising: ejecting the ink composition of any one of claims 1 to 4 onto a recording medium; and irradiating the ejected ink composition with radiation so as to cure the ink composition.

6. A printed material obtained by the method of claim 5.

7. A method for forming a planographic printing plate comprising: ejecting the ink composition of any one of claims 1 to 4 onto a hydrophilic support; and irradiating the ejected ink composition with radiation so as to cure the ink composition and form a hydrophobic region.

8. A planographic printing plate comprising a hydrophobic region which is formed by the method of claim 7.

## Patentansprüche

1. Tintenzusammensetzung, umfassend: eine Oniumsalzverbindung (A), die einen anionischen Teil (i), umfassend eine Säuregruppe mit geringer Nukleophilität und eine gehinderte Aminstruktur, und einen kationischen Teil (ii), der Foto-zersetzbar ist, aufweist; einen kationischen Polymerisationsinitiator (B), der auf Strahlung anspricht; eine kationisch polymerisierbare Verbindung (C); und ein Färbemittel (D).

2. Tintenzusammensetzung gemäß Anspruch 1, worin die Säuregruppe mit geringer Nukleophilität in der Oniumsalzverbindung (A) eine Säuregruppe ist, die eine formale Ladung an eine Stickstoffatom oder einem Kohlenstoffatom aufweist.

3. Tintenzusammensetzung gemäß Anspruch 1, worin die Oniumsalzverbindung (A) eine Verbindung ist, die durch irgendeine der folgenden Formeln (a) bis (e) dargestellt wird: 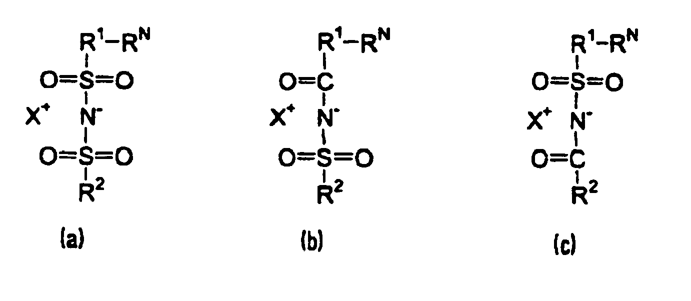 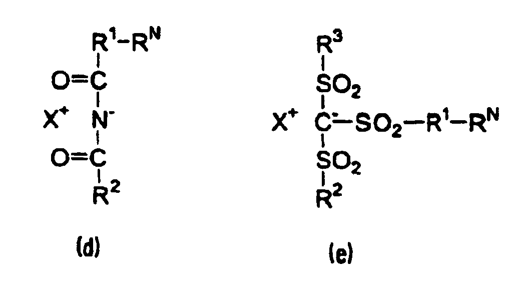 worin in den Formeln (a) bis (e) X ein zersetzbares Sulfonium oder ein zersetzbares Jodonium darstellt; R¹ eine Alkylengruppe, eine Arylengruppe, eine Aralkylengruppe, eine Perfluoralkylengruppe, eine Perfluorarylengruppe, eine Perfluoraralkylengruppe, eine Cycloalkylengruppe oder eine Perfluorcycloalkylengruppe darstellt; R² und R³ jeweils unabhängig voneinander eine Alkylgruppe, eine Arylgruppe, eine Aralkylgruppe, eine Perfluoralkylgruppe, eine Perfluorarylgruppe, eine Perfluoraralkylgruppe, eine Cycloalkylgruppe oder eine Perfluorcycloalkylgruppe darstellen; die die durch R² dargestellte Gruppe und die durch R³ dargestellte Gruppe miteinander verbunden sein können, um eine cyclische Struktur zu bilden; ein Teil der durch R¹ dargestellten Gruppe und die durch eines von R² und R³ dargestellte Gruppe miteinander verbunden sein können, um eine cyclische Struktur zu bilden; und R^{N} eine Aminstruktur darstellt.

4. Tintenzusammensetzung gemäß irgendeinem der Ansprüche 1 bis 3, worin die Menge der Oniumsalzverbindung (A) im Bereich von 0,01 bis 15 Massen% liegt, relativ zur Gesamtmenge der Tintenzusammensetzung, ausgedrückt als Feststoffgehalt, und die Tintenzusammensetzung in der Tintenstrahlaufzeichnung eingesetzt wird.

5. Verfahren zur Tintenstrahlaufzeichnung, umfassend: Ausstoßen der Tintenzusammensetzung gemäß irgendeinem der Ansprüche 1 bis 4 auf ein Aufzeichnungsmedium; und Bestrahlen der ausgestoßenen Tintenzusammensetzung mit Strahlung, um so die Tintenzusammensetzung zu härten.

6. Bedrucktes Material/Drucksache, erhalten durch das Verfahren gemäß Anspruch 5,

7. Verfahren zum Bilden einer Flachdruckplatte, umfassend:
Ausstoßen der Tintenzusammensetzung gemäß irgendeinem der Ansprüche 1 bis 4 auf einen hydrophilen Träger; und
Bestrahlen der ausgestoßen Tintenzusammensetzung mit Strahlung, um so die Tintenzusammensetzung zu härten und einen hydrophoben Bereich zu bilden.

8. Flachdruckplatte, umfassend einen hydrophoben Bereich, der mit dem Verfahren gemäß Anspruch 7 gebildet ist.

## Revendications

1. Composition d'encre comprenant : un composé de sel d'onium (A) ayant une partie anionique (i) comprenant un groupe acide ayant une faible nucléophilicité et une structure amine contrariée et une partie cationique (ii) qui peut est photodécomposable ; un initiateur de polymérisation cationique (B) sensible à un rayonnement ; un composé polymérisable cationique (C) ; et un agent colorant (D).

2. Composition d'encre selon la revendication 1, dans laquelle le groupe acide ayant une faible nucléophilicité dans le composé de sel d'onium (A) est un groupe acide ayant une charge formelle sur un atome d'azote ou un atome de carbone.

3. Composition d'encre selon la revendication 1, dans laquelle le composé de sel d'onium (A) est un composé représenté par n'importe laquelle des formules suivantes (a) à (e) : 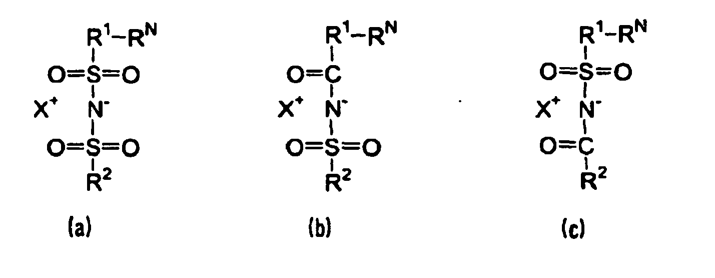 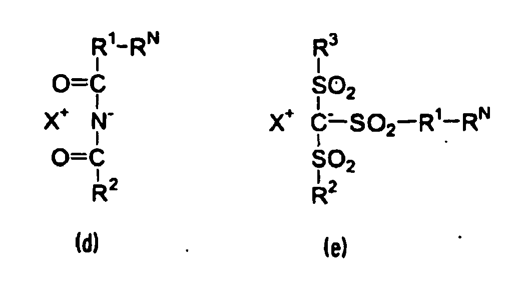 dans laquelle, dans les Formules (a) à (e), X représente un sulfonium dégradable ou un iodonium dégradable ; R¹ représente un groupe alkylène, un groupe arylène, un groupe aralkylène, un groupe perfluoroalkylène, un groupe perfluoroarylène, un groupe perfluoroaralkylène, un groupe cycloalkylène, ou un groupe perfluoro cycloalkylène ; R² et R³ représentent chacun indépendamment un groupe alkyle, un groupe aryle, un groupe aralkyle, un groupe perfluoroalkyle, un groupe perfluoroaryle, un groupe perfluoroaralkyle, un groupe cycloalkyle, ou un groupe perfluoro cycloalkyle ; le groupe représenté par R² et le groupe représenté par R³ peuvent être liés l'un à l'autre pour former une structure cyclique ; une partie du groupe représenté par R¹ et le groupe représenté par l'un ou l'autre de R² et R³ peuvent être liés l'un à l'autre pour former une structure cyclique ; et R^{N} représente une structure amine.

4. Composition d'encre selon l'une quelconque des revendications 1 à 3, dans laquelle la quantité du composé de sel d'onium (A) est dans la plage de 0,01 à 15 % en masse par rapport à la quantité totale de la composition d'encre en termes de teneur en solides, et la composition d'encre est utilisée dans l'enregistrement à jet d'encre.

5. Procédé pour l'enregistrement à jet d'encre comprenant : l'éjection de la composition d'encre selon l'une quelconque des revendications 1 à 4 sur un support d'enregistrement ; et l'irradiation de la composition d'encre éjectée par un rayonnement de façon à cuire la composition d'encre.

6. Matière imprimée obtenue par le procédé selon la revendication 5.

7. Procédé pour former une plaque d'impression planographique comprenant : l'éjection de la composition d'encre selon l'une quelconque des revendications 1 à 4 sur un support hydrophile ; et l'irradiation de la composition d'encre éjectée par un rayonnement de façon à cuire la composition d'encre et former une région hydrophobe.

8. Plaque d'impression planographique comprenant une zone hydrophobe qui est formée par le procédé selon la revendication 7.
